# EUROPÄISCHE PATENTSCHRIFT

(11) **EP 3 412 395 B1**
(45) Veröffentlichungstag und Bekanntmachung des Hinweises auf die Patenterteilung: **04.11.2020**
(21) Anmeldenummer: 18172877.5
(22) Anmeldetag: 17.05.2018
(51) Int. Cl.: B23F 23/06, B23F 19/10, B23F 21/00

(54) **VORRICHTUNG UND VERFAHREN ZUM ANFASEN EINES INNENVERZAHNTEN WERKSTÜCKS**
DEVICE AND METHOD FOR CHAMFERING AN INTERNALLY COGGED WORKPIECE
DISPOSITIFS ET PROCÉDÉ DE CHANFREINAGE D'UNE PIÈCE À DENTURE INTÉRIEURE

(30) Priorität: 06.06.2017 DE 102017112450
(43) Veröffentlichungstag der Anmeldung: 12.12.2018
(73) Patentinhaber: Liebherr-Verzahntechnik GmbH, 87437 Kempten (DE)
(72) Erfinder: Weixler, Johannes, 87471 Durach (DE)
(74) Vertreter: Behr, Wolfgang

(56) Entgegenhaltungen:
- EP-A1- 2 260 964
- WO-A1-2015/185186
- DE-A1-102008 016 497
- DE-A1-102012 008 296
- DE-A1-102013 015 240
- DE-C1- 4 122 461
- US-A1- 2013 121 779

## Beschreibung

Die vorliegende Erfindung betrifft Vorrichtungen gemäß den Oberbegriffen der Ansprüche 1 und 9 sowie Verfahren gemäß den Oberbegriffen der Ansprüche 13 und 14 zum Anfasen mindestens einer stirnseitigen Kante der Verzahnung eines innenverzahnten Werkstücks, mit mindestens einer drehbar gelagerten Werkstückaufnahme zur Aufnahme des Werkstücks und mit mindestens einer drehbar gelagerten Werkzeugaufnahme zur Aufnahme mindestens eines Anfasfräsers. Insbesondere kann es sich bei dem Anfasfräser um einen Chamfer-Cut-Fräser handeln.

Bei der Bearbeitung von Werkstücken zur Herstellung einer Verzahnung auf dem Werkstückrohling entstehen scharfkantige Materialüberstände an den bearbeiteten Werkstückkanten. Diese als Grate bezeichneten Überstände müssen durch Entgraten der Kanten der Verzahnung entfernt werden, da sie in den Folgeprozessen stören bzw. beim manuellen Teilhandling für den Maschinenbediener eine Verletzungsgefahr darstellen. Zusätzlich werden die Kanten der Verzahnung häufig noch mit speziellen Schutzanfasungen versehen.

Das Anfasen der Werkstücke erfolgt üblicherweise durch speziell angepasste Entgrat-Werkzeuge im Anschluss an die Herstellung der Verzahnung auf dem Werkstückrohling. Für diesen Anfasprozess gibt es mehrere Verfahren nach dem Stand der Technik.

Druckschrift DE 41 22 461 C1 beschreibt Vorrichtungen gemäß den Oberbegriffen der Ansprüche 1 und 9 sowie Verfahren gemäß den Oberbegriffen der Ansprüche 13 und 14. DE 41 22 461 C1 beschreibt ein Verfahren zum Bearbeiten der Stirnkanten der Zähne eines Werkstückzahnrades, bei dem das Werkstückzahnrad kontinuierlich gedreht wird und durch auf diese Drehung abgestimmte, periodische Relativbewegungen zwischen den Zähnen des Werkstückzahnrads und einem mit von der Werkstückzahnrad-Drehzahl unabhängigen Drehzahl angetriebenen, fingerförmigen Formwerkzeug unter entsprechender Spanzustellung die Stirnkanten-Bearbeitung erfolgt. Dabei wird ein fingerförmiges Formwerkzeug verwendet, dessen Profil wenigstens angenähert dem Zahnprofil der Verzahnung eines gedachten Gegenrades entspricht, wobei das drehangetriebene fingerförmige Formwerkzeug radial zur Achse des gedachten Gegenrades ausgerichtet um diese Achse in einem ungeraden Verhältnis einer gewählten Zähnezahl des gedachten Gegenrades zur Zähnezahl des Werkstückzahnrades zur Erzeugung einer Wälzbewegung zwischen dem Werkstückzahnrad und fingerförmigen Formwerkzeug gedreht wird.

Druckschrift US 2013/121779 A1 zeigt ein Verfahren zum Bearbeiten einer Zahnkante des Werkstücks, bei welchem die Werkzeugspindel, welche den Anfasfräser aufnimmt, an einem Roboterarm angeordnet ist.

Weitere Verzahnbearbeitungsverfahren sind aus den Druckschriften DE 10 2012 008296 A1, DE 10 2008 016497 A1, WO 2015/185186 A1 und DE 10 2013 015240 A1 bekannt.

In der Serienfertigung werden vor allem die Verfahren Drückentgraten gemäß der DE 8328237 A sowie Anfasfräsentgraten gemäß der DE 20320294 A sowie der DE 202007016740 A verwendet.

Die DE 20320294 A zeigt dabei das Anfasfräsentgraten mit einem sogenannten Chamfer-Cut-Fräser. Ein solcher Chamfer-Cut-Fräser ist ein scheibenförmiges Entgratwerkzeug 11, welches am Umfang Schneidzähne 12 und Spannuten aufweist, bevorzugt mit jeweils gleichem Umfangsabstand. Die Schneidzähne haben einen in Umfangsrichtung schraubenlinienförmigen Verlauf. Der Chamfer-Cut-Fräser ist mehrgängig, wobei pro Gang ein Zahn vorgesehen ist. Die an der in Drehrichtung vorderen Seite der Zähne ausgebildeten Schneidkanten liegen jedoch auf einem gemeinsamen Flugkreis.

Die oben genannten Anfas-Verfahren werden üblicherweise zum Anfasen von Werkstücken mit einer Außenverzahnung eingesetzt, beispielsweise indem das Entgrat-Werkzeug zusammen mit dem Fräswerkzeug auf dem gleichen Werkzeugdorn aufgespannt und nach dem Fräsvorgang mit den Kanten der Verzahnung in Eingriff gebracht wird.

Aus der DE 10 2013 015 240 A1 ist es bereits bekannt, eine Anfas-Fräs-Station einzusetzen, bei welcher als einzige Werkzeuge in der Werkzeugspindel Anfasfräser, insbesondere Chamfer-Cut-Fräser, eingesetzt werden. Weiterhin ist dort angegeben, dass die dort gezeigte Vorrichtung zum Anfasen von Innenverzahnungen auch innerhalb eines innenverzahnten Werkstücks angeordnet werden kann. Dabei soll die Vorrichtung bei größeren Innenverzahnungen innerhalb des verzahnten Werkstückes auf einer feststehenden Konsole im Zentrum des Maschinentisches oder einem Support über dem Maschinentisch angeordnet sein und so der Anfasbearbeitung von Innenverzahnungen dienen. Bei Innenverzahnungen mit kleinerem Innendurchmesser reicht der Bauraum für diese Ausführungsform aber nicht mehr aus.

Weiterhin müssen gemäß dem Stand der Technik, wie er bspw. aus der DE 10 2013 015 240 A1 bekannt ist, zum Anfasen der Kanten der Verzahnung auf der Oberseite bzw. Unterseite des Werkstücks zwei Anfasfräser eingesetzt werden, wenn für beide Kanten die gleiche Schneidrichtung zwischen Anfasfräser und Verzahnung gewünscht ist.

Für das Anfasen von Außenverzahnungen ist es aus der DE 10 2009 019 433 A1 bekannt, beide Kanten mit dem gleichen Anfasfräser zu bearbeiten, wobei zur Bereitstellung der gleichen Schneidrichtung zwischen Anfasfräser und Verzahnung die Werkzeugaufnahme um 180° gedreht wird. Das Anfasen von Innenverzahnungen ist hier nicht beschrieben. Weiterhin erfordert die aus dieser Druckschrift bekannte Ausgestaltung einen erheblichen konstruktiven Aufwand

Gemäß einem ersten Aspekt ist es daher Aufgabe der vorliegenden Erfindung, eine verbesserte Vorrichtung und ein verbessertes Verfahren zum Anfasen der Kanten einer Verzahnung eines innenverzahnten Werkstücks zur Verfügung zu stellen. Gemäß einem zweiten Aspekt ist es Aufgabe der vorliegenden Erfindung, eine verbesserte Vorrichtung und ein verbessertes Verfahren zum Anfasen der Kanten der Verzahnung auf der Oberseite und der Unterseite mit dem selben Anfasfräser zur Verfügung zu stellen.

Diese Aufgaben werden erfindungsgemäß durch die Vorrichtungen und Verfahren gemäß den unabhängigen Ansprüchen 1,9,13 und 14 gelöst. Vorteilhafte Ausgestaltungen der vorliegenden Erfindung bilden den Gegenstand der Unteransprüche.

Die vorliegende Erfindung umfasst in einem ersten Aspekt eine Vorrichtung gemäß Anspruch 1 zum Anfasen mindestens einer stirnseitigen Kante der Verzahnung eines innenverzahnten Werkstücks, wobei die Vorrichtung mindestens eine drehbar gelagerte Werkstückaufnahme zur Aufnahme des Werkstücks und mindestens eine drehbar gelagerte Werkzeugaufnahme zur Aufnahme mindestens eines Anfasfräsers, insbesondere eines Chamfer-Cut-Fräsers, umfasst. Erfindungsgemäß ist gemäß dem ersten Aspekt vorgesehen, dass die Werkzeugaufnahme an einem Innenfräsarm angeordnet ist, dessen freies Ende durch eine Maschinenachse der Vorrichtung zumindest teilweise in die durch die Innenverzahnung des Werkstücks gebildete Mittenöffnung hinein verfahren werden kann.

Die erfindungsgemäße Ausgestaltung der Vorrichtung ermöglicht durch das Eintauchen des freien Endes des Innenfräsarms in die Mittenöffnung des Werkstücks ein vereinfachtes Verzahnen von Innenverzahnungen, insbesondere auch von relativ kleinen Innenverzahnungen.

Die erfindungsgemäße Vorrichtung ist bevorzugt so ausgestaltet, dass innenverzahnte Werkstücke mit einem Innendurchmesser bearbeitet werden können, welcher in einem Bereich zwischen 50mm und 800mm liegt. Bevorzugt erlaubt die Vorrichtung die Bearbeitung von Werkstücken, welche einen Innendurchmesser im Bereich zwischen 150 mm und 500 mm aufweisen.

Bevorzugt ist das freie Ende des Innenfräsarms von einer Oberseite des Werkstücks aus durch die Mittenöffnung des Werkstücks hindurch verfahrbar. Weiterhin bevorzugt kann das freie Ende des Innenfräsarmes aus der Mittenöffnung des Werkstücks heraus verfahren werden.

Durch die Verfahrbarkeit des Innenfräsarms ist insbesondere ein problemloses Wechseln des Werkstückes möglich, ohne die Funktionalität beim Anfasen zu verringern.

Spricht die vorliegende Anmeldung von einer Oberseite bzw. einer Unterseite des Werkstückes, bzw. einer Anordnung von Komponenten oberhalb, unterhalb oder neben dem Werkstück, so bedeutet dies nicht, dass die Werkstückaufnahme eine vertikale Drehachse aufweisen muss oder dass die Oberseite in vertikaler Richtung oberhalb der Unterseite angeordnet ist, oder dass eine entsprechende Anordnung der Komponenten tatsächlich in vertikaler Richtung über oder unter dem Werkstück oder in horizontaler Richtung neben dem Werkstück erfolgt.

Vielmehr handelt es sich bei diesen Begriffen lediglich um die Angabe von relativen Anordnungen in einer durch die Werkstückdrehachse vorgegebenen Richtung, durch welche die Oberseite und die Unterseite des Werkstücks definiert ist. Vorteilhafterweise wird dabei als Oberseite des Werkstücks jene Seite angesehen, von welcher aus der Innenfräsarm in die Mittenöffnung der Innenverzahnung eintaucht, und/oder als Unterseite des Werkstücks jene Seite des Werkstücks, welche der Werkstückaufnahme zugewandt ist.

Je nach Maschinenkonzept wäre auch eine Anordnung denkbar, bei der die Werkstückachse während der Bearbeitung horizontal angeordnet ist, was wiederum eine horizontale Ausrichtung der erfindungsgemäßen Vorrichtung erfordern würde.

Bevorzugt kann die an dem Innenfräsarm angeordnete Werkzeugaufnahme durch die Mittenöffnung des Werkstücks hindurch verfahren werden, um den Anfasfräser mit einer Kante der Verzahnung auf der Unterseite des Werkstücks in Eingriff zu bringen. Hierdurch erlaubt die Vorrichtung ein Anfasen der Kante der Verzahnung auf der der Werkstückaufnahme zugewandten Unterseite des Werkstücks, welche anders nicht zugänglich wäre. Hierbei handelt es sich um ein spezifisch bei Innenverzahnungen auftretendes Problem, welches erfindungsgemäß durch den Einsatz des Innenfräsarms gelöst wird.

Bevorzugt kann das freie Ende des Innenfräsarms soweit durch die Mittenöffnung des in der Werkstückaufnahme aufgenommen innenverzahnten Werkstücks hindurch verfahren werden, dass sich die Drehachse der Werkzeugaufnahme in Achsrichtung der Werkstückaufnahme um mindestens 10% des Radius des Anfasfräsers unterhalb der Kante der Verzahnung auf der Unterseite des in der Werkstückaufnahme aufgenommenen innenverzahnten Werkstücks befindet.

Weiter bevorzugt ist der Innenfräsarm soweit durch die Mittenöffnung des Werkstücks hindurch verfahrbar, dass sich die Drehachse der Werkzeugaufnahme in Achsrichtung der Werkstückaufnahme um mindestens 20%, weiter bevorzugt um mindestens 30% unterhalb der Kante der Verzahnung auf der Unterseite des in der Werkstückaufnahme aufgenommen innenverzahnten Werkstücks befindet.

In einer bevorzugten Ausgestaltung der vorliegenden Erfindung weist die Werkstückaufnahme eine topfförmige Vertiefung auf, welche ein Verfahren des Anfasfräsers unter die Kante der Verzahnung auf der der topfförmigen Vertiefung zugewandten Unterseite des Werkstücks erlaubt. Die topfförmige Vertiefung der Werkstückaufnahme erlaubt so bevorzugt die Bearbeitung der Kante der Verzahnung auf der Unterseite des Werkstücks.

Bevorzugt beträgt die Tiefe der topfförmigen Vertiefung ausgehend von einer Auflagekante für die Unterseite des Werkstücks dabei mehr als 50% des Radius des Anfasfräsers, weiter bevorzugt mehr als 60%, 70% oder 80% des Radius des Anfasfräsers.

Weiterhin bevorzugt sind die Seitenwände der topfförmigen Vertiefung soweit in radialer Richtung zurück versetzt, dass der Anfasfräser mit einem Teil seines Radius unterhalb des nicht verzahnten Bereichs des Werkstückes angeordnet werden kann, um die Kannten des verzahnten Bereichs zu bearbeiten.

Bevorzugt ist die Vorrichtung so ausgestaltet, dass sich die Maschinenachse, über welche das freie Ende des Innenfräsarms in die Mittenöffnung hinein verfahrbar ist, selbst nicht in die Mittenöffnung des Werkstücks hinein erstreckt. Bevorzugt ist diese Maschinenachse oberhalb oder neben der Werkstückaufnahme angeordnet. Durch diese Ausgestaltung kann ein besonders schlanker Innenfräsarm zur Verfügung gestellt werden, welcher als Ganzes über eine oder mehrere außerhalb des Werkstücks angeordnete Achsen verfahren wird. Hierdurch sind auch relativ kleine Innenverzahnungen bearbeitbar.

Die Maschinenachse kann so ausgestaltet sein, dass sie ein Verfahren des Innenfräsarms in Achsrichtung der Werkstückaufnahme ermöglicht. Bevorzugt handelt es sich um eine Linearachse.

In einer möglichen Ausgestaltung der vorliegenden Erfindung weist der Innenfräsarm keine Verfahrachsen auf, sondern wird über Verfahrachsen eines Bearbeitungskopfes verfahren, an welchem er angeordnet ist.

In einer bevorzugten Ausgestaltung ist der Innenfräsarm an einem neben oder über der Werkstückaufnahme angeordneten Bearbeitungskopf angeordnet und kann über diesen bewegt werden.

Der Bearbeitungskopf kann eine Maschinenachse zur Bewegung des Innenfräsarms in Achsrichtung der Werkstückaufnahme und/oder eine Schwenkachse zum Schwenken des Innenfräsarms um eine zur Drehachse der Werkstückaufnahme und/oder zur Drehachse der Werkzeugaufnahme senkrechte Schwenkachse und/oder eine Maschinenachse zum Verfahren des Innenfräsarms in eine Richtung senkrecht zur Drehachse der Werkstückaufnahme und/oder senkrecht zur Drehachse der Werkzeugaufnahme aufweisen. Bei den Maschinenachsen handelt es sich bevorzugt um NC-Achsen die über eine Steuerung der Maschine bewegt werden.

Der Bearbeitungskopf ist bevorzugt an einem Maschinenständer angeordnet, welcher neben der Werkstückaufnahme auf einem Maschinenbett angeordnet ist und die Verfahrachsen zur Verfügung stellt.

Die Form des Innenfräsarmes ist im Rahmen der vorliegenden Erfindung zunächst nicht weiter festgelegt, und muss lediglich so gewählt werden, dass das freie Ende des Innenfräsarms bzw. die Werkzeugaufnahme mit dem daran angeordneten Werkzeug mittels eines Verfahrens des Innenfräsarms in die Mittenöffnung eintauchen bzw. durch die Mittenöffnung hindurch geführt werden kann. Dabei muss sichergestellt sein, dass der Innenfräsarm über die Schwenkachse der Vorrichtung entsprechend dem Schrägungswinkel der Verzahnung und dem Steigungswinkel des Werkzeuges, in allen Bearbeitungsstellungen, eingeschwenkt werden kann ohne mit der Innenverzahnung zu kollidieren.

Zur Anpassung an verschiedene Durchmesser von Innenverzahnungen können verschieden große Innenfräsarme zur Aufnahme unterschiedlicher Werkzeuge mit verschiedenem Durchmesser vorgesehen sein. Über einen geeignete Schnittstelle können diese Arme innerhalb der Vorrichtung wechselbar ausgeführt sein.

In einer bevorzugten Ausgestaltung erstreckt sich der Innenfräsarm zumindest auch in einer Richtung senkrecht zur Achsrichtung der Werkzeugaufnahme. Weiterhin bevorzugt ist der Innenfräsarm so angeordnet oder durch Verfahren einer Verfahrachse der Vorrichtung so anordenbar, dass er sich zumindest auch in Achsrichtung der Werkstückaufnahme erstreckt.

Bevorzugt erstreckt sich die Hauptachse des Innenfräsarms senkrecht zur Achsrichtung der Werkzeugaufnahme. Weiterhin bevorzugt ist der Innenfräsarm so angeordnet oder kann durch Verfahren Maschinenachse, insbesondere einer Verfahrachse und/oder Schwenkachse der Vorrichtung so angeordnet werden, dass sich die Hauptachse des Innenfräsarmes in einem Winkel zur Achsrichtung der Werkstückaufnahme erstreckt, welcher sich aus dem Schrägungswinkels der Innenverzahnung und dem Steigungswinkel des Werkzeuges ergibt, und/oder dass sich die Hauptachse des Innenfräsarmes in einem Winkelbereich von ± 30°, bevorzugt von ± 15° zur Achsrichtung der Werkstückaufnahme erstreckt

In einer bevorzugten Ausgestaltung der vorliegenden Erfindung ist der Innenfräsarm an einer Halterung angeordnet. Bevorzugt erstreckt sich diese ausgehend von einem neben der Werkstückaufnahme angeordneten Bearbeitungskopf senkrecht zur Achsrichtung der Werkzeugaufnahme und zur Achsrichtung der Werkstückaufnahme. Alternativ oder zusätzlich kann der Innenfräsarm mit der Halterung eine Hakenform bilden, so dass er beabstandet zum Bearbeitungskopf verläuft. Weiter bevorzugt ist der Antrieb für die Werkzeugaufnahme an der Halterung angeordnet.

In einer bevorzugten Ausgestaltung der vorliegenden Erfindung ist in dem Innenfräsarm ein Antriebsstrang vorgesehen, welcher einen rumpfseitig angeordneten Antrieb durch den Innenfräsarm hindurch mit der am Innenfräsarm angeordneten Werkzeugaufnahme verbindet. Hierdurch muss der Antrieb nicht mehr unmittelbar im Bereich der Werkzeugaufnahme angeordnet werden und bildet hierdurch keine Störkontur mehr.

Der Antriebsstrang kann eine Mehrzahl von miteinander kämmenden, entlang des Innenfräsarms angeordneten Zahnrädern aufweisen. Weiterhin alternativ oder zusätzlich kann der Antriebsstrang einen sich innerhalb des Innenfräsarms erstreckenden Riemen- und/oder Kettenantrieb aufweisen.

Der Innenfräsarm ist erfindungsgemäß so ausgestaltet, dass er einen Eingriff zwischen dem Anfasfräser und der zu bearbeitenden Kante des Werkstücks erlaubt. Hierfür weist er bevorzugt eine relativ schlanke Bauform auf.

Bevorzugt trägt der Werkzeugdorn der Werkzeugaufnahme nur einen Anfasfräser. Hierdurch wird die Breite des Innenfräsarms inklusive Werkzeugdorn verringert, da nur ein kurzer Werkzeugdorn benötigt wird.

In einer möglichen Ausgestaltung der vorliegenden Erfindung beträgt die Breite des Werkzeugdorns weniger als das 5-fache der Breite des Anfasfräsers, weiter bevorzugt weniger als das 3-fache der Breite des Anfasfräsers.

In einer möglichen Ausgestaltung der vorliegenden Erfindung beträgt die Breite des Innenfräsarms inklusive der Breite des Werkzeugdorns entlang der Achse der Werkzeugaufnahme weniger als das 10-fache der Breite des Anfasfräsers, bevorzugt weniger als das 5-fache. Alternativ oder zusätzlich kann die Breite des Innenfräsarms inklusive Werkzeugdorn entlang der Achse der Werkzeugaufnahme weniger als 50% des Innendurchmessers der zu bearbeitenden Verzahnung des Werkstücks betragen.

In einer möglichen Ausgestaltung der vorliegenden Erfindung ist die maximale Erstreckung der durch die Werkzeugaufnahme und/oder das freie Ende des Innenfräsarms gebildeten Störkante, ausgehend von einer durch die Drehachse der Werkzeugaufnahme verlaufenden Ebene, zu mindest zu einer Seite hin um mindestens 10% kleiner als der Radius eines in der Werkzeugaufnahme aufgenommenen Anfasfräsers, bevorzugt um mindestens 20% und weiter bevorzugt um mindestens 25% kleiner.

Bei der Ebene von welcher aus der Abstand zur Störkante bestimmt wird, kann es sich um eine Mittelebene des Innenfräsarms handeln. Die Ebene kann in einer möglichen Ausführungsform parallel zur Drehachse des Werkstücks verlaufen. Alternativ kann jedoch auch eine zur Drehachse der Werkstückaufnahme geneigte Ebene als Referenzebene eingesetzt werden.

In einer bevorzugten Ausgestaltung der vorliegenden Erfindung weist die erfindungsgemäße Vorrichtung einen Sensor zum Einfädeln und/oder Einmitten des Anfasfräsers in die Innenverzahnung des Werkstücks auf.

Ein solcher Sensor ist insbesondere dann notwendig, wenn die erfindungsgemäße Vorrichtung als stand-alone Anordnung ausgeführt ist bzw. das Werkstück, dessen Kanten angefast werden sollen, zuvor bei der Herstellung der Verzahnung in einer anderen Werkstückaufnahme angeordnet war und bspw. über einen Werkstückwechsler zur Werkstückaufnahme der erfindungsgemäßen Vorrichtung transportiert wird, da in diesem Fall die Position der Verzahnung relativ zur Vorrichtung nicht bekannt ist.

Bevorzugt handelt es sich um einen berührungslosen Sensor. Beispielsweise kann ein induktiver Sensor und/oder ein optischer Sensor eingesetzt werden.

Der Sensor ist bevorzugt an dem Innenfräsarm angeordnet. Bevorzugt wird an dem Innenfräsarm angeordnete Sensor zur Bestimmung der Lage der Verzahnung am Werkstück mittels des Innenfräsarms an die Verzahnung herangefahren, und das Werkstück über die Werkstückaufnahme am Sensor vorbei gedreht. Hierdurch kann die Lage der Verzahnung, beispielsweise durch Erfassen der Lage der Zahnköpfe, bestimmt werden.

Bevorzugt ist der Sensor oberhalb oder unterhalb der Werkzeugaufnahme am Innenfräsarm angeordnet, so dass der Anfasfräser beim Heranfahren des Sensors an die Verzahnung keine Störkante bildet. Bevorzugt kann der Sensor mittels des Innenfräsarms in die Mittenöffnung der Verzahnung eintauchen und/oder an die Innenverzahnung herangefahren werden. Bevorzugt ist der Sensor am freien Ende des Innenfräsers unterhalb der Werkzeugaufnahme angeordnet.

In alternativen Ausgestaltungen könnte der Sensor zum Einfädeln und/oder Einmitten des Anfasfräsers jedoch auch an einem separaten Arm geordnet sein, über welchen er in die Innenverzahnung hinein verfahren wird. Weiterhin wäre beispielsweise beim Einsatz optischer Sensoren auch eine Anordnung des Sensors außerhalb der Verzahnung denkbar.

Bevorzugt erlaubt die erfindungsgemäße Vorrichtung zumindest die Bearbeitung der Kante der Verzahnung auf der Unterseite des Werkstückes, insbesondere indem das freie Ende des Innenfräsarmes mit der Werkzeugaufnahme durch die durch die Innenverzahnung gebildete Mittenöffnung des Werkstücks von der Oberseite des Werkstücks zur Unterseite des Werkstücks hindurch verfahren wird.

Die erfindungsgemäße Vorrichtung kann in einer möglichen Ausgestaltung nur zum Bearbeiten der Kante der Verzahnung auf einer Stirnseite des Werkstückes einsetzbar sein. Zum Bearbeiten der anderen Kante des Werkstückes würde dann eine weitere Vorrichtung, welche nicht notwendigerweise erfindungsgemäß ausgestaltet sein muss, eingesetzt werden.

In einer alternativen, bevorzugten Ausgestaltung der vorliegenden Erfindung ist die Vorrichtung jedoch so ausgestaltet, dass sie sowohl das Bearbeiten der Kante der Verzahnung auf der Oberseite, als auch auf der Unterseite des Werkstückes erlaubt.

Im Folgenden werden nun unterschiedliche Ausführungsformen der vorliegenden Erfindung beschrieben, welche bevorzugt eine Bearbeitung sowohl der Kante der Verzahnung auf der Oberseite, als auch auf der Unterseite des Werkstücks ermöglichen.

In einer ersten Ausgestaltung umfasst die Vorrichtung zwei Werkzeugaufnahmen zum Aufnehmen von Anfasfräsern, insbesondere von Chamfer-Cut-Fräsern. Bevorzugt wird ein in der einen Werkzeugaufnahme aufgenommener Anfasfräser zum Bearbeiten der Kante der Verzahnung auf der Unterseite, ein in der anderen Werkzeugaufnahme aufgenommener Anfasfräser zum Bearbeiten der Kante der Verzahnung auf der Oberseite eingesetzt.

Der Einsatz von zwei Werkzeugaufnahmen und damit zwei Anfasfräsern für die Bearbeitung der Kante an der Ober- und Unterseite des Werkstücks ist insbesondere dann von Vorteil, wenn aufgrund der Geometrie des Werkstückes unterschiedliche Anfasfräser für die Oberseite und die Unterseite eingesetzt werden müssen. Dabei werden zwei Werkzeugaufnahmen und/oder zwei separate Anfasfräser bevorzugt bei konischen Werkstücken oder Werkstücken mit unterschiedlich gestalteten Stirnflächen an der Verzahnung eingesetzt.

Der Einsatz von zwei Werkzeugaufnahmen und damit zwei Anfasfräsern kann auch dann von Vorteil sein, wenn zwei unterschiedliche Werkstücke abwechselnd bearbeitet werden sollen. Der eine Anfasfräser wird dann zum Anfasen des ersten Werkstücks, der andere zum Anfasen des zweiten Werkstücks eingesetzt.

Bevorzugt sind die zwei Werkzeugaufnahmen über mindestens eine gemeinsame Maschinenachse verfahrbar. Hierdurch wird der konstruktive Aufwand verringert. Besonders bevorzugt sind die Werkzeugaufnahmen über mehrere gemeinsame Maschinenachsen verfahrbar. Insbesondere können die mehreren Werkzeugaufnahmen an dem gleichen Bearbeitungskopf angeordnet sein.

Die beiden Werkzeugaufnahmen sind in einer möglichen Ausführungsform der vorliegenden Erfindung nicht relativ zueinander verfahrbar, und insbesondere starr an einem Bearbeitungskopf angeordnet.

Die Drehachsen der beiden Werkzeugaufnahmen verlaufen bevorzugt parallel zueinander.

Bevorzugt sind die beiden Werkzeugaufnahmen mit umgekehrter Drehrichtung antreibbar. Die Verwendung von umgekehrten Drehrichtungen für die beiden Werkzeugaufnahmen und damit zum Bearbeiten der Kante auf der Oberseite und der Unterseite erlaubt in einer bevorzugten Ausgestaltung die Bearbeitung der Oberseite und der Unterseite des Werkstücks mit der gleichen Schnittrichtung zwischen dem Werkzeug und der Verzahnung. Dies sorgt dafür, dass die beim Anfasen verbleibenden Grate entweder auf beiden Seiten an den Stirnseiten der Verzahnung verbleiben, oder auf beiden Seiten im Inneren der Verzahnung verbleiben.

In einer ersten Alternative sind die zwei Werkzeugaufnahmen an demselben Innenfräsarm angeordnet. Insbesondere können die zwei Werkzeugaufnahmen übereinander entlang des Innenfräsarms angeordnet sein.

Insbesondere kann so beim Anfasen der Kante der Verzahnung auf der Unterseite des Werkstücks und/oder beim Anfasen der Kante der Verzahnung auf der Oberseite die untere Werkzeugaufnahme unterhalb Kante der Verzahnung auf der Unterseite des Werkstücks und die obere Werkzeugaufnahme oberhalb der Kante der Verzahnung auf der Oberseite des Werkstücks angeordnet werden, wobei sich der Innenfräsarm durch die Mittenöffnung des Werkstücks hindurch erstreckt.

Dabei kann zunächst ein in einer der Werkzeugaufnahmen angeordneter Anfasfräser mit der einen Kante, und dann durch ein Verfahren des Innenfräsarms in Achsrichtung der Werkstückaufnahme ein in der anderen Werkzeugaufnahme aufgenommener Anfasfräser mit der anderen Kante in Eingriff gebracht werden.

In einer zweiten Alternative sind die zwei Werkzeugaufnahmen an separaten Innenfräsarmen angeordnet. Bevorzugt sind diese in Achsrichtung der Werkzeugaufnahmen voneinander beabstandet an einem Bearbeitungskopf angeordnet. Die Innenfräsarme verlaufen bevorzugt parallel zueinander, d.h. ihre Hauptachsen sind parallel zueinander ausgerichtet.

Bevorzugt erfolgt die Anordnung der beiden Innenfräsarme und der Werkzeugaufnahmen so, dass bei der Bearbeitung einer Kante des Werkstücks durch einen an dem einen Innenfräsarm angeordneten Anfasfräser der andere Innenfräsarm außerhalb des Werkstücks angeordnet ist und umgekehrt.

Bevorzugt wird durch einen an dem einen Innenfräsarms angeordneten Anfasfräser die Kante der Verzahnung auf der Unterseite des Werkstücks, und durch einen an dem anderen Innenfräsarm angeordneten Anfasfräser die Kante der Verzahnung auf der Oberseite des Werkstücks bearbeitet.

Alternativ oder zusätzlich können die zwei separaten Innenfräsarme jedoch auch dann eingesetzt werden, wenn zwei unterschiedliche Werkstücke ohne Werkzeugwechsel bearbeitbar sein sollen. In diesem Fall kann ein an einem der Innenfräsarme angeordneter Anfasfräser zum Bearbeiten sowohl der Kante an der Oberseite, als auch der Kante an der Unterseite des einen Werkstücks eingesetzt werden, und ein an dem anderen Innenfräsarm angeordneter Anfasfräser zum Bearbeiten sowohl der Kante an der Oberseite, als auch der Kante an der Unterseite des anderen Werkstücks.

In diesem Fall können auch Innenfräsarme unterschiedlicher Geometrie und/oder Baugröße vorgesehen sein, wobei die Innenfräsarme zur Aufnahme von Anfasfräsern mit unterschiedlich großem Durchmesser zur Bearbeitung von Innenverzahnungen mit unterschiedlichem Innendurchmesser dienen, und/oder wobei die Innenfräsarme eine unterschiedliche Länge aufweisen, um Innenverzahnungen, bei welchen der oder die verzahnten Bereiche unterschiedlich tief im Werkstück angeordnet sind, zu bearbeiten. Insbesondere kann dies jeweils auch so erfolgen, wie dies im Folgenden anhand des zweiten unabhängigen Aspekts der vorliegenden Erfindung näher beschrieben wird.

In einer weiteren Ausgestaltung der vorliegenden Erfindung ist die Werkzeugaufnahme über eine zu ihrer Drehachse senkrechte Schwenkachse um 180 ° drehbar. Bevorzugt ist die Schwenkachse am Innenfräsarm angeordnet. Insbesondere kann die Schwenkachse ein Schwenken eines unteren Teils des Innenfräsarms mit der Werkstückaufnahme gegenüber einem oberen Teil des Innenfräsarms oder einer Verbindung mit der Halterung ermöglichen. Die Schwenkachse verläuft bevorzugt parallel zur Hauptachse des Innenfräsarms und/oder schneidet die Drehachse der Werkzeugaufnahme. Weiter bevorzugt verläuft die Schwenkachse parallel zur Drehachse der Werkstückaufnahme, wenn die Drehachse der Werkzeugaufnahme senkrecht auf dieser steht. Bevorzugt erfolgt eine Anfasbearbeitung der Kanten auf der Oberseite und der Unterseite des Werkstücks mit um 180° verschwenkter Werkzeugaufnahme und gleicher Drehrichtung der Werkstückaufnahme, um die gleiche Schnittrichtung bezüglich des Werkstücks zu erhalten.

In einem zweiten unabhängigen Aspekt umfasst die vorliegende Erfindung eine Vorrichtung gemäß Anspruch 9 zum Anfasen mindestens einer stirnseitigen Kante der Verzahnung eines verzahnen Werkstücks, welche mindestens eine drehbar gelagerte Werkstückaufnahme zur Aufnahme des Werkstücks und mindestens eine drehbar gelagerte Werkzeugaufnahme zur Aufnahme eines Anfasfräsers, insbesondere eines Chamfer-Cut-Fräsers aufweist, wobei die Werkzeugaufnahme über mindestens eine Maschinenachse relativ zur Werkstückaufnahme verfahrbar ist. Gemäß dem zweiten Aspekt ist vorgesehen, dass die Vorrichtung ein Anfasen der Kanten der Verzahnung auf beiden Stirnseiten des Werkstücks mit dem selben Anfasfräser erlaubt, indem ein in der Werkzeugaufnahme aufgenommener Anfasfräser in einer bezüglich der Drehachse des Werkstücks ersten radialen Richtung mit einem Kantenbereich einer ersten Seite des Werkstücks in Eingriff gebracht wird und durch Verfahren der Werkzeugaufnahme relativ zur Werkstückaufnahme in einer bezüglich der Achsrichtung der Werkstückaufnahme zweiten radialen Richtung mit einem radial gegenüberliegenden Kantenbereich der zweiten Seite des Werkstücks in Eingriff gebracht wird.

Bevorzugt erfolgt zusätzlich zu einem Verfahren, durch welches der Anfasfräser mit dem zweiten Kantenbereich in Eingriff gebracht wird, ein Verschwenken der Werkzeugaufnahme um eine Schwenkachse, welche senkrecht zur Drehachse der Werkzeugaufnahme und/oder der Werkstückaufnahme verläuft. Insbesondere kann hierdurch eine Anpassung der Ausrichtung zwischen Anfasfräser und Werkstück an den Steigungswinkel des Anfasfräsers und/oder den Schrägungswinkel der Verzahnung vorgenommen werden.

Ein solches Verfahren des Anfasfräsers, um diesen in bevorzugt entgegengesetzten radialen Richtungen mit den Kanten der Verzahnung an der Oberseite und Unterseite des Werkstücks in Eingriff zu bringen, ist sowohl bei Innenverzahnungen, als auch bei Außenverzahnungen möglich.

Bevorzugt erfolgt das Anfasen der Kante der Verzahnung auf der Oberseite des Werkstücks mit der gleichen Drehrichtung des Werkzeugs wie das Anfasen der Kante der Verzahnung auf der Unterseite des Werkstücks. Bevorzugt wird jedoch die Drehrichtung des Werkstücks umgekehrt. Hierdurch weist das Werkzeug sowohl für die Oberseite, als auch für die Unterseite die Schnittrichtung bezüglich der Verzahnung auf. Insbesondere wird dabei sowohl auf der Oberseite, als auch auf der Unterseite entweder mit einer Schnittrichtung aus der Verzahnung heraus, oder mit einer Schnittrichtung in die Verzahnung hinein gearbeitet. Hierdurch sind die nach dem Anfasen verbleibenden Grate an der Ober- und Unterseite jeweils gleich angeordnet, d.h. entweder stirnseitig, oder im Bereich der Verzahnung.

Bevorzugt ist die Werkzeugaufnahme an einem Fräsarm angeordnet, wobei ein in der Werkzeugaufnahme aufgenommene Anfasfräser von zwei sich bezüglich der Drehachse der Werkzeugaufnahme gegenüberliegenden Seiten aus zugänglich ist, so dass er mit der ersten Seite mit dem Kantenbereich der Verzahnung auf der Oberseite des Werkstücks und mit der zweiten Seite mit dem Kantenbereich der Verzahnung auf der Unterseite des Werkstücks in Eingriff gebracht werden kann. Bevorzugt ragt das Anfaswerkzeug hierfür auf beiden Seiten mit seinem Radius über die Werkzeugaufnahme und den Fräsarm hinaus.

Die Werkzeugaufnahme kann bevorzugt durch Verfahren des Fräsarmes relativ zur Werkstückaufnahme verfahren werden.

Bei der Bearbeitung von außenverzahnten Werkstücken gemäß dem zweiten Aspekt muss die Werkzeugaufnahme mit dem Anfasfräser nach dem Anfasen eines Kantenbereiches auf einer Seite um das Werkstück herum verfahren werden. Dies kann bei einseitiger Einspannung des Werkstücks durch ein Verfahren in axialer Richtung der Werkstückaufnahme erfolgen, und durch ein Verfahren der Werkzeugaufnahme in einer Ebene senkrecht zur Drehachse der Werkstückaufnahme.

Bevorzugt wird die Vorrichtung gemäß dem zweiten Aspekt jedoch zum Anfasen von Innenverzahnungen eingesetzt. Hier ist ein Verfahren der Werkzeugaufnahme mit dem Anfasfräser von der ersten Eingriffsposition zur zweiten Eingriffsposition besonders einfach, da hierfür der Anfasfräser lediglich in radialer und in axialer Richtung durch die Mittenöffnung der Verzahnung hindurch verfahren werden muss. Insbesondere kann dies durch ein Verfahren der Werkzeugaufnahme mit dem Anfasfräser in radialer Richtung zur Drehachse der Werkstückaufnahme durch die Mitte des Werkstücks und einer zusätzlichen, gegebenenfalls überlagerten Bewegung der Werkzeugaufnahme mit dem Anfasfräser in Richtung der Drehachse der Werkzeugaufnahme erfolgen.

Die Vorrichtungen gemäß dem ersten und dem zweiten Aspekt sind zunächst unabhängig voneinander Gegenstand der vorliegenden Erfindung. Besonders bevorzugt sind jedoch beide Aspekte in einer einzigen Vorrichtung gemeinsam verwirklicht.

Insbesondere kann eine Vorrichtung gemäß dem zweiten Aspekt daher einen Innenfräsarm zur Bearbeitung von Innenverzahnungen gemäß dem ersten Aspekt aufweisen.

Die erfindungsgemäßen Vorrichtungen werden üblicherweise in der Serienfertigung und insbesondere der Großserienfertigung eingesetzt. Die Bearbeitung der Werkstücke und damit auch der Anfasprozess erfolgt in diesem Fall automatisiert durch die Steuerung der Vorrichtung.

Die erfindungsgemäßen Vorrichtungen weisen daher eine Steuerung zur automatischen Ansteuerung der Maschinenachsen der Vorrichtung zum Anfasen der Kante der Verzahnung auf mindestens einer und bevorzugt auf beiden Stirnseiten eines Werkstücks auf.

Die Steuerung der Vorrichtung ist bevorzugt so programmiert, dass die erfindungsgemäßen Vorrichtungen die oben im Hinblick auf deren Funktionsweise und/oder Anwendung beschriebenen Schritte automatisch durchführt.

Die Steuerung weist insbesondere einen Mikroprozessor und einen Speicher auf, in welchem ein Steuerprogramm zur Ansteuerung der Vorrichtung abgespeichert ist, welches durch den Mikroprozessor abgearbeitet wird.

Die vorliegende Erfindung stellt zunächst eine Vorrichtung, wie sie oben näher beschrieben wurde, unter Schutz, welche zur Aufnahme eines Anfasfräsers und insbesondere eines Chamfer-Cut-Fräsers in der Werkzeugaufnahme und zur Durchführung der oben beschriebenen Anwendungen geeignet ist.

Die vorliegende Erfindung umfasst jedoch ebenfalls eine Vorrichtung, wie sie oben beschrieben ist, bei welcher mindestens ein Anfasfräser in der Werkzeugaufnahme aufgenommen ist, bzw. bei welchem bei mehreren Werkzeugaufnahmen in diesen jeweils Anfasfräser aufgenommen sind. Insbesondere sind dabei in der Werkzeugaufnahme oder den Werkzeugaufnahmen Chamfer-Cut-Fräser aufgenommen

Die vorliegende Erfindung betrifft weiterhin ein Verzahnbearbeitungszentrum mit einer Vorrichtung, wie sie oben beschrieben wurde, eine Verzahnmaschine und einen Werkstückwechsler. Bevorzugt handelt es sich bei der Verzahnmaschine um eine Maschine zur Bearbeitung von Innenverzahnungen, insbesondere eine Fräsmaschine und/oder eine Verzahungsstoßmaschine oder um eine Wälzschälmaschine.

Bevorzugt erfolgt die Verzahnbearbeitung und das Anfasen der Werkstücke in dem Verzahnbearbeitungszentrum taktzeit-parallel. Insbesondere werden durch die Verzahnmaschine verzahnte Werkstücke über den Werkstückwechsler zur Vorrichtung gemäß der vorliegenden Erfindung zum Anfasen weiter transportiert, um angefast zu werden, während auf der Verzahnmaschine bereits das nächste Werkstück verzahnt wird. Dabei ist auch ein Anfasen des Werkstücks zwischen einem Schruppschritt und einem Schlichtschritt denkbar, wofür das Werkstück bevorzugt von der Verzahnmaschine zu der erfindungsgemäßen Vorrichtung und wieder zurück verfahren wird.

Bevorzugt handelt es sich bei dem Werkstückwechsler um eine Ring-Automation, wobei weiterhin bevorzugt die erfindungsgemäße Vorrichtung zum Anfasen sowie die Verzahnmaschine an unterschiedlichen Winkelpositionen der Ring-Automation angeordnet sind.

Bevorzugt weisen die Verzahnmaschine und die erfindungsgemäße Vorrichtung separate Werkstückaufnahmen auf. Der Werkstückwechsler wechselt in diesem Fall ein Werkstück nach der Verzahnbearbeitung der Verzahnmaschine von der dortigen Werkstückaufnahme zur Werkstückaufnahme der erfindungsgemäßen Vorrichtung zum Anfasen.

In einer alternativen Ausgestaltung kann das Verzahnbearbeitungszentrum jedoch auch mehrere Werkstückaufnahmen aufweisen, in welchen die Werkstücke für die Verzahnbearbeitung und die Anfasbearbeitung verbleiben. In diesem Fall werden die Werkstückaufnahmen bevorzugt von der Verzahnmaschine zu der erfindungsgemäßen Vorrichtung bewegt und/oder umgekehrt.

Der Werkstückwechsler wird bevorzugt dazu eingesetzt, um Werkstücke von einer externen Transportstrecke oder anderen Bearbeitungsstationen auf die Werkstückaufnahme oder Werkstückaufnahmen aufzulegen und von diesen abzunehmen.

Gemäß einem weiteren Aspekt kann die erfindungsgemäße Vorrichtung auch als eine separate Maschine ausgeführt sein. Bevorzugt erhält diese verzahnte Werkstücke von einer Transportstrecke und/oder Automation, um diese Anfaszubearbeiten. Die entsprechend bearbeiteten Werkstücke werden dann bevorzugt wieder einer Transportstrecke und/oder Automation übergeben.

Die vorliegende Erfindung umfasst gemäß dem ersten Aspekt weiterhin ein Verfahren gemäß Anspruch 13 zum Anfasen mindestens einer stirnseitigen Kante der Verzahnung eines innenverzahnten Werkstücks durch einen in einer drehbar gelagerten Werkzeugaufnahme aufgenommen Anfasfräser, insbesondere einen Chamfer-Cut-Fräser. Erfindungsgemäß ist dabei vorgesehen, dass die Werkzeugaufnahme am einen Innenfräsarm angeordnet ist, dessen freies Ende zu Anfasbearbeitung zumindest teilweise in die durch die Verzahnung des Werkstücks gebildete Mittenöffnung hinein verfahren wird. Bevorzugt wird die Werkzeugaufnahme durch Verfahren des Innenfräsarms durch die Mittenöffnung des Werkstücks hindurch verfahren, um den Anfasfräser mit einer Kante der Verzahnung auf der Unterseite des Werkstücks in Eingriff zu bringen.

Bevorzugt erfolgt das erfindungsgemäße Verfahren so, wie dies bereits oben im Hinblick auf den ersten Aspekt der vorliegenden Erfindung näher beschrieben wurde. Insbesondere kann das erfindungsgemäße Verfahren dabei durch eine Vorrichtung durchgeführt werden, wie sie oben im Hinblick auf den ersten Aspekt beschrieben wurde.

Die vorliegende Erfindung umfasst gemäß dem zweiten Aspekt weiterhin ein Verfahren gemäß Anspruch 14 zum Anfasen mindestens einer stirnseitigen Kante der Verzahnung eines verzahnten Werkstücks durch einen in einer Werkzeugaufnahme aufgenommenen Anfasfräser, insbesondere einen Chamfer-Cut-Fräser, wobei im Rahmen des erfindungsgemäßen Verfahrens ein Anfasen der Kanten der Verzahnung auf beiden Stirnseiten des Werkstücks mit demselben Anfasfräser erfolgt, indem ein in der Werkzeugaufnahme aufgenommener Anfasfräser in einer bezüglich der Achse des Werkstücks ersten radialen Richtung mit einem Kantenbereich einer ersten Seite des Werkstücks in Eingriff gebracht wird und durch Verfahren der Werkzeugaufnahme relativ zum Werkstück in einer bezüglich der Achsrichtung des Werkstücks zweiten radialen Richtung mit einem radial gegenüberliegenden Kantenbereich der zweiten Seite des Werkstücks in Eingriff gebracht wird.

Bevorzugt erfolgt das Verfahren so, wie dies oben im Hinblick auf die Vorrichtung gemäß dem zweiten Aspekt der vorliegenden Erfindung näher dargestellt wurde. Insbesondere erfolgt das erfindungsgemäße Verfahren bevorzugt mit einer Vorrichtung gemäß dem zweiten Aspekt.

Auch das erfindungsgemäße Verfahren gemäß dem zweiten Aspekt kann sowohl für das Anfasen von Außenverzahnungen, als auch für das Anfasen von Innenverzahnungen eingesetzt werden.

Bevorzugt werden die Verfahren gemäß dem ersten und dem zweiten Aspekt miteinander kombiniert.

Die erfindungsgemäße Verfahren und Vorrichtungen werden bevorzugt zum Anfasen der Kanten von Stirnradverzahnungen eingesetzt.

Bei den Werkstücken handelt es sich bevorzugt um Zahnräder, insbesondere um Zahnräder mit mindestens einer Innenverzahnung. Solche Zahnräder mit einer Innenverzahnung weisen bevorzugt eine Ringform auf, wobei die Innenverzahnung an der inneren Ringfläche angeordnet ist.

Bevorzugt erfolgt das Anfasen gemäß der vorliegenden Erfindung über einen Chamfer-Cut-Fräser. Insbesondere kann der Chamfer-Cut-Fräser so ausgestaltet sein wie das Entgrat-Werkzeug, welches in der DE 10330474 A1 beschrieben ist. Weiterhin bevorzugt erfolgt das Anfasen mittels des Chamfer-Cut-Fräsers so, wie dies ebenfalls in der DE 10330474 A1 für den Entgratvorgang beschrieben ist.

Anders als in der DE 10330474 A1 gezeigt wird der Chamfer-Cut-Fräser jedoch im Rahmen der vorliegenden Erfindung bevorzugt nicht mit dem Werkzeug, welches zur Herstellung der Verzahnung eingesetzt wird, auf dem gleichen Werkzeugdorn aufgespannt, sondern in einer eigenen Werkzeugaufnahme, bevorzugt als einziges Werkzeug in einer eigenen Werkzeugaufnahme.

Die vorliegende Erfindung wird nun anhand von Zeichnungen sowie Ausführungsbeispielen näher beschrieben:

Dabei zeigt:
- Fig. 1:: ein erstes Ausführungsbeispiel einer erfindungsgemäßen Vorrichtung zum Anfasen in einer perspektivischen Ansicht,
- Fig. 2:: den Innenfräsarm und die Werkstückaufnahme der in Fig. 1 gezeigten Vorrichtung in einer perspektivischen Darstellung,
- Fig. 3:: den Innenfräsarm und die Werkstückaufnahme in einer Seitenansicht, wobei der Innenfräsarm noch nicht in die Mittenöffnung des zu bearbeiteten Werkstücks eingetaucht ist,
- Fig. 4:: eine Seitenansicht, bei welcher ein am Innenfräsarm angeordneter Sensor zum Einmitten und/oder Einfädeln im Bereich der Innenverzahnung angeordnet wurde, wofür der Innenfräsarm teilweise in die Innenverzahnung eintaucht,
- Fig. 5:: eine Seitenansicht, in welcher die am Innenfräsarm angeordnete Werkzeugaufnahme durch die Mittenbohrung hindurch zur Unterseite des Werkstücks verfahren wurde, um mit dem Anfasfräser eine Kante der Verzahnung auf der Unterseite des Werkstücks zu bearbeiten,
- Fig.6:: eine Seitenansicht, in welcher der Innenfräsarm in bezüglich der Drehachse der Werkstückaufnahme radialer Richtung durch die Mitte des verzahnten Werkstücks verfahren wurde, um eine Kante der Verzahnung auf der Oberseite des Werkstücks zu bearbeiten,
- Fig. 7:: ein zweites Ausführungsbeispiel einer erfindungsgemäßen Vorrichtung mit zwei separaten Innenfräsarmen,
- Fig. 8:: eine perspektivische Ansicht, bei welcher der am ersten Innenfräsarm aufgenommene Anfasfräser zum Anfasen einer Kante der Verzahnung auf der Unterseite eines ersten Werkstücks eingesetzt wird,
- Fig. 9:: eine perspektivische Ansicht, in welcher der am ersten Innenfräsarm aufgenommene Anfasfräser zur Bearbeitung einer Kante der Verzahnung auf der Oberseite des ersten Werkstücks eingesetzt wird, indem der Innenfräsarm bezüglich der Drehachse der Werkstückaufnahme in radialer Richtung auf die gegenüberliegende Seite verfahren wurde,
- Fig. 10:: eine perspektivische Darstellung, in welcher der am zweiten Innenfräsarm aufgenommene Anfasfräser zum Anfasen einer Kante der Verzahnung auf der Unterseite eines zweiten Werkstücks eingesetzt wird,
- Fig. 11:: eine perspektivische Ansicht, in welcher der am zweiten Innenfräsarm aufgenommene Anfasfräser zur Bearbeitung einer Kante der Verzahnung auf der Oberseite des zweiten Werkstücks eingesetzt wird, indem der Innenfräsarm bezüglich der Drehachse der Werkstückaufnahme in radialer Richtung auf die gegenüberliegende Seite verfahren wurde,
- Fig. 12:: ein drittes Ausführungsbeispiel der erfindungsgemäßen Vorrichtung, wobei am Innenfräsarm zwei Werkzeugaufnahmen angeordnet sind,
- Fig. 13:: das in Fig. 12 gezeigte Ausführungsbeispiel in einer Seitenansicht in einer Stellung, in welcher ein Sensor zum Einmitten und/oder Einfädeln in die Mittenöffnung der Verzahnung hinein verfahren wurde,
- Fig. 14:: die in Fig. 12 und 13 gezeigte Vorrichtung in einer Seitenansicht, wobei der in der unteren Werkzeugaufnahme aufgenommene Anfasfräser zum Bearbeiten der Kante der Verzahnung auf der Unterseite des Werkstücks mit einer ersten Drehrichtung eingesetzt wird,
- Fig. 15:: das in Fig. 12 bis 14 gezeigte Ausführungsbeispiel, wobei der in der oberen Werkzeugaufnahme aufgenomme Anfasfräser zum Bearbeiten der Kante der Verzahnung auf der Oberseite des Werkstücks eingesetzt wird, wobei die umgekehrte Drehrichtung eingesetzt wird,
- Fig. 16:: eine perspektivische Ansicht eines Verzahnzentrums mit dem ersten Ausführungsbeispiel der erfindungsgemäßen Vorrichtung und einem Ringlader.

Die im Folgenden anhand der Figuren beschriebenen Ausführungsbeispiele der erfindungsgemäßen Vorrichtung weisen jeweils eine drehbar gelagerte Werkstückaufnahme 20 zur Aufnahme eines innenverzahnten Werkstücks 21 sowie eine drehbar gelagerte Werkzeugaufnahme 10 zur Aufnahme eines Anfasfräsers 11 auf.

Die Werkstückaufnahme 20 und die Werkzeugaufnahme 10 sind jeweils über einen Antrieb um ihre jeweilige Drehachse C3 bzw. B3 in Rotation versetzbar. Die Vorrichtung weist eine Steuerung auf, über welche die Drehbewegung der Werkstückaufnahme 20 und die Drehbewegung der Werkzeugaufnahme 10 angesteuert und bevorzugt miteinander synchronisiert werden können.

Die Werkzeugaufnahme 10 ist gemäß dem ersten Aspekt der vorliegenden Erfindung an einen Innenfräsarm 30 angeordnet. Der Innenfräsarm 30 kann über Maschinenachsen der Vorrichtung zumindest teilweise in die durch die Innenverzahnung eines in der Werkstückaufnahme 20 aufgenommenen Werkstücks 21 gebildete Mittenöffnung hinein verfahren werden.

Im Ausführungsbeispiel ist der Innenfräsarm 30 hierfür an einem neben der Werkstückaufnahme 20 angeordneten Bearbeitungskopf 40 angeordnet, welcher über mehrere Maschinenachsen verfahrbar ist.

Insbesondere ist der Bearbeitungskopf 40 um eine Schwenkachse A3 schwenkbar, welche senkrecht zu den Drehachsen B3 und C3 der Werkzeugaufnahme 10 und der Werkstückaufnahme 20 verläuft. Weiterhin ist der Bearbeitungskopf 40 über eine Linearachse Z3 in einer Richtung parallel zur Drehachse C3 der Werkstückaufnahme verfahrbar. Insbesondere kann der Bearbeitungskopf 40 hierfür über einen Schlitten innerhalb eines Rahmens 50 angeordnet sein. Weiterhin kann der Bearbeitungskopf 40 über eine Linearachse X3 (innerhalb des Rahmens (50)) in einer Richtung senkrecht zu den Drehachsen B3 und C3 der Werkzeugaufnahme 10 und der Werkstückaufnahme 20 verfahren werden. Im Ausführungsbeispiel kann hierfür der Maschinenständer 55 über einen Schlitten gegenüber der Konsole 60, auf welchem die Werkstückaufnahme 20 am Maschinenbett angeordnet ist, verfahren werden.

Im Ausführungsbeispiel ist weiterhin eine Shift-Achse V3 vorgesehen, über welche der Bearbeitungskopf in Richtung der Drehachse B3 der Werkzeugaufnahme verfahren werden kann. Alternativ oder zusätzlich könnte jedoch auch eine Y3-Achse vorgesehen sein, über welche der Bearbeitungskopf in einer Richtung senkrecht zur X3-Achse und zur Z3-Achse verfahren werden kann.

Das Verfahren des Innenfräsarms in die Mittenöffnung hinein erfolgt im Ausführungsbeispiel über die Z3-Achse. Die weiteren Maschinenachsen werden eingesetzt, um die Position des Innenfräsarms und/oder Anfasfräsers relativ zur Innenverzahnung einzustellen.

Auch andere mechanische Ausgestaltungen der Maschinenachsen zur Verfahren des Bearbeitungskopfes sind denkbar. Beispielsweise könnte auf eine oder mehrere der oben genannten Maschinenachsen verzichtet werden, bspw. auf die V3-Achse und/oder die A3-Achse.

Weiterhin könnte der Bearbeitungskopf hängend oberhalb der Werkstückaufnahme 20 angeordnet sein, statt wie im Ausführungsbeispiel neben der Werkstückaufnahme an einem Maschinenständer. Die Anordnung des Bearbeitungskopfes am Maschinenständer hat jedoch konstruktive Vorteile.

Im Ausführungsbeispiel ist der Innenfräsarm 30 über eine Halterung 31 am Bearbeitungskopf 40 angeordnet. Die Halterung 31 weist eine Montageplatte 33 auf, welche sich bevorzugt parallel zu einer durch die Drehachsen B3 und C4 definierten Ebene erstreckt und über welche die Halterung 31 am Bearbeitungskopf befestigt werden kann. Die Befestigung erfolgt bevorzugt so, dass die Schwenkachse A3 die Drehachse B3 der Werkzeugaufnahme 10 schneidet.

Die Halterung 31 erstreckt sich von der dem Werkstück zugewandten Vorderseite des Bearbeitungskopfes 40 in einer Richtung senkrecht zu den Drehachsen B3 und C3. Der Innenfräsarm 30 erstreckt sich ausgehend von einem Verbindungsbereich mit der der Halterung 31 in einer Richtung senkrecht zur Drehachse B3 der Werkzeugaufnahme. Der Innenfräsarm verläuft durch die Anordnung an der Halterung 31 beabstandet zu der dem Werkstück zugewandten Vorderseite des Bearbeitungskopfes 40. Im Ausführungsbeispiel verläuft die Hauptachse des Innenfräsarms parallel zu der dem Werkstück zugewandten Vorderseite des Bearbeitungskopfes 40 und/oder parallel zu einer durch die Drehachsen B3 und C4 definierten Ebene.

Der Innenfräsarm ist so ausgestaltet, dass er bei einer entsprechenden Schwenkstellung der Schwenkachse A3 in die Mittenöffnung des Werkstücks 21 eintauchen kann. Die Hauptachse des Innenfräsarms erstreckt sich hierfür bevorzugt senkrecht zur Drehachse B3 der Werkzeugaufnahme, und kann weiter bevorzugt durch Verschwenken um die Schwenkachse A3 so angeordnet werden, dass das in der Werkzeugaufnahme aufgenommene Werkzeug entsprechend seinem Steigungswinkel zum Werkstück angeordnet ist.

Der Innenfräsarm 30 weist zusammen mit der Halterung 31 eine hakenförmige Gestalt auf, so dass beim Eintauchen des Innenfräsarms in die Mittenöffnung ein Teil des Werkstücks zwischen dem Innenfräsarm und dem Bearbeitungskopf angeordnet ist. Dieser oder der gegenüberliegende Teil der Verzahnung wird dabei bevorzugt durch den Anfasfräser bearbeitet.

Im Ausführungsbeispiel ist der Antrieb 32 für die Werkzeugaufnahme 10 nicht am Innenfräsarm 30 angeordnet, sondern an der Haltung 31. Hierdurch kann der Innenfräsarm 30 schmal ausgeführt werden, und so auch in Werkstücke mit geringem Innendurchmesser eintauchen.

Zum Antrieb der Werkzeugaufnahme 10 verläuft im Innenfräsarm 30 und in der Halterung 31 einen Antriebsstrang. Bevorzugt ist hierfür ein Riemenantrieb vorgesehen. Dieser verläuft bevorzugt von einer antriebsseitigen Riemenscheibe zu einem im Verbindungsbereich zwischen Innenfräsarm 30 und Halterung 31 angeordneten Riemenscheibenpaar, von welchem aus ein weiterer Riemenantrieb zu einer auf der Drehachse der Werkzeugaufnahme 10 angeordneten Riemenscheibe durch den Innenfräsarm 30 hindurch verläuft.

Alternativ könnte der Antrieb auch über Zahnräder und/oder Wellen erfolgen.

Am Fräsarm 30 ist weiterhin ein Sensor 60 zum Einfädeln und/oder Einmitten des Anfasfräsers 11 in die Innenverzahnung vorgesehen. Bei dem Sensor 60 kann es sich insbesondere um einen berührungslosen Sensor handeln, beispielsweise um einen induktiven Sensor und/oder einen optischen Sensor. Dieser wird durch Verfahren des Innenfräsarms in die Mittenöffnung des Werkstücks mit seiner Wirkfläche 61 neben der Verzahnung des Werkstücks 21 platziert. Daraufhin wird die Verzahnung durch Drehen der Werkstückaufnahme 20 am Sensor vorbei gefahren, wobei der Sensor die Position der Zähne der Innenverzahnung erfasst.

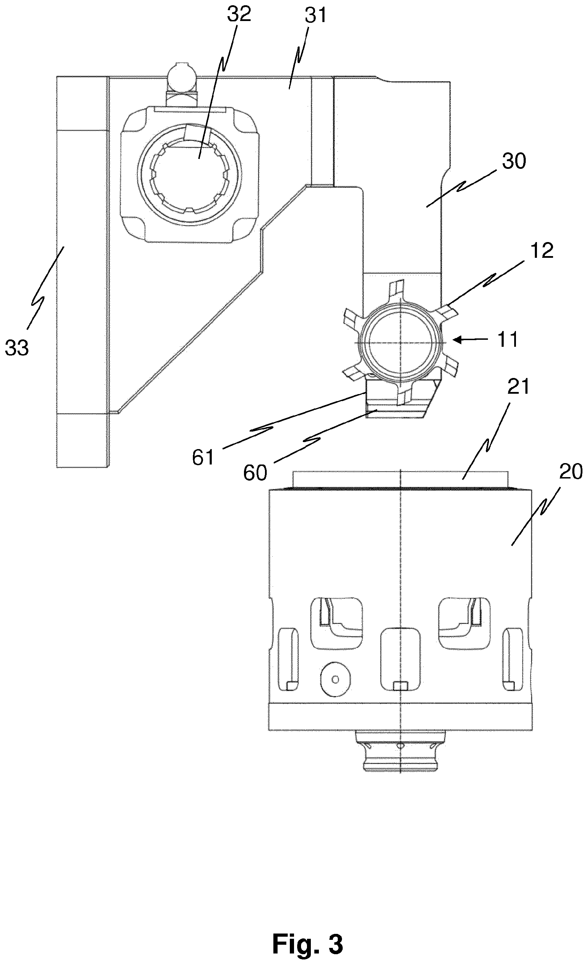

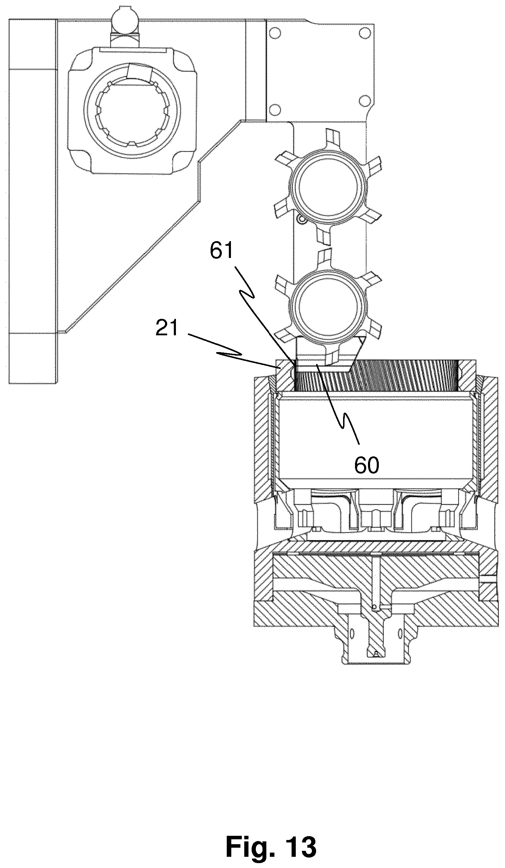

Im Ausführungsbeispiel ist der Sensor 60 am freien Ende des Innenfräsarms 30 unterhalb der Werkzeugaufnahme 10 angeordnet. Wie in Fig. 3 und 13 dargestellt, taucht der Innenfräsarm 30 daher mit seinem freien Ende in die durch die Innenverzahnung des Werkstücks 21 gebildete Mittenöffnung ein, so dass sich die Wirkseite 61 des Sensors 60 neben der Innenverzahnung befindet. Der Sensor ist dabei so weit unterhalb der Werkzeugaufnahme 10 angeordnet, dass ein in der Werkzeugaufnahme 10 aufgenommener Anfasfräser 11 in der Messposition des Fräsarms nicht mit der Verzahnung 21 in Kontakt kommen kann und daher keine Störkante bildet.

Die erfindungsgemäße Vorrichtung erlaubt es weiterhin, die Werkzeugaufnahme 10 für den Anfasfräser 11 mittels des Innenfräsarms 31 durch die Mittenöffnung des Werkstücks 21 hindurch zu verfahren, um den Anfasfräser zum Anfasen der Kante 27 der Verzahnung auf der Unterseite des Werkstücks 21 einzusetzen.

Hierfür weist der Innenfräsarm 30 eine entsprechend lang gestreckte und schmale Form auf, welche ein Verfahren durch die Mittenöffnung erlaubt.

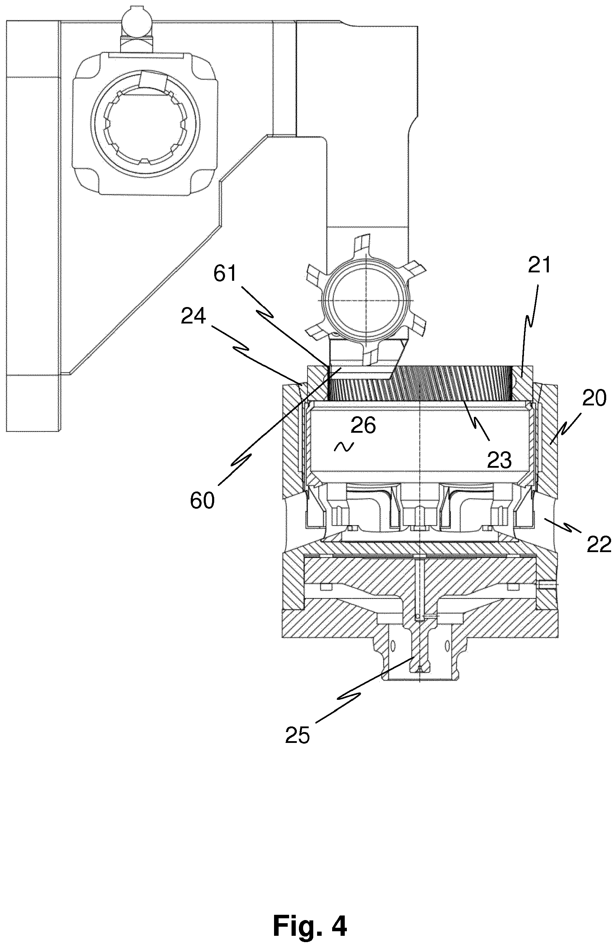

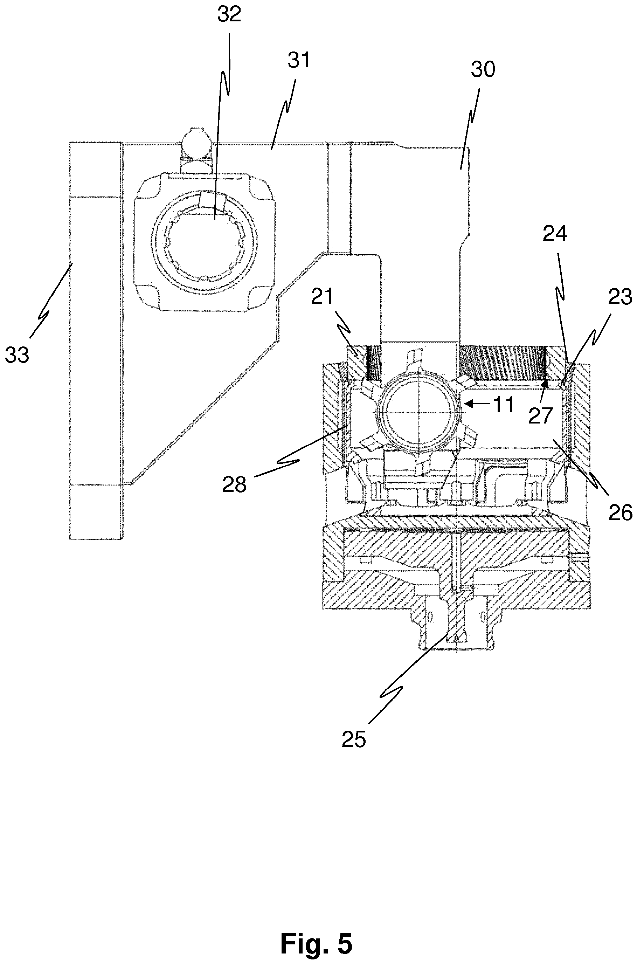

Weiterhin ist die Werkstückaufnahme 20, wie insbesondere im Schnitt in Fig. 4 und 5 gezeigt, topfförmig ausgestaltet, und bietet hierdurch unterhalb der Mittenöffnung des Werkstücks 21 genügend Raum zur Aufnahme des freien Endes des Innenfräsarms 30 und des Anfasfräsers 11.

Die Werkstückaufnahme weist im Ausführungsbeispiel eine Auflagekante 23 auf, auf welcher die Unterseite des Werkstücks mit einem Außenbereich, in welchen die Verzahnung nicht hineinreicht, aufliegt. Weiterhin sind Spannbacken 24 vorgesehen, welche am Außenumfang des Werkstücks angreifen und bevorzugt über ein zentrales Spannmittel 25 gespannt werden können.

Unterhalb der Auflagekante 23 erstreckt sich eine topfförmige Ausnehmung 26, welche den Innenfräsarm und den Anfasfräser aufnehmen kann. Hierfür ist zum einen eine entsprechende Tiefe der Ausnehmung notwendig. Weiterhin sind die Seitenwände 28 der topfförmigen Ausnehmung 26 in radialer Richtung ausreichend weit nach außen gesetzt, so dass sich die Zähne 12 des Anfasfräsers 11 unterhalb des unverzahnten Bereichs des Werkstücks 21 befinden. Hierfür können die Seitenwände gegenüber der Auflagekante 23 zurück versetzt sein. Alternativ oder zusätzlich kann die Auflagekante 23 so schmal gewählt werden, dass das Werkstück nicht mit seinem kompletten unverzahnten Bereich auf der Auflagekante 23 aufliegt.

In der in Fig. 5 gezeigten Bearbeitungsposition, in welcher die Kante 27 der Verzahnung auf der Unterseite des Werkstücks bearbeitet wird, beträgt der Winkel zwischen der Drehachse C3 der Werkstückaufnahme und einer Geraden, welche sich ausgehend von der Drehachse B3 der Werkzeugaufnahme zu der zu bearbeitenden Kante 27 auf der Unterseite erstreckt, bevorzugt zwischen 30° und 60°, weiter bevorzugt zwischen 45° und 60°. Hierdurch wird ein entsprechender Winkel der Fase am Werkstück erreicht. Dementsprechend weit muss die Werkzeugaufnahme unterhalb der zu bearbeitenden Kante angeordnet werden, wofür die Ausgestaltung der Ausnehmung 26 den notwendigen Raum zur Verfügung stellt.

Der Innenfräsarm 30 ist im Bereich der Werkzeugaufnahme so schmal ausgeführt, dass die Zähne 12 des Anfasfräsers 11 auf mindestens einer Seite über die durch den Innenfräsarm 30 gebildete Störkante hinaus schauen und so in Eingriff mit der Kante der Innenverzahnung gebracht werden können. Bevorzugt kann der Anfasfräser 11 dabei zumindest auf der zum Bearbeitungskopf hin gerichteten Seite mit der Innenverzahnung in Eingriff gebracht werden.

In den gezeigten Ausführungsbeispiel ist der Innenfräsarm 30 jedoch so ausgestaltet, dass der Anfasfräser auf zwei Seiten mit der Innenverzahnung in Eingriff gebracht werden kann. Hierfür ragen die Zähne 12 des Anfasfräsers 11 auch auf der dem Bearbeitungskopf abgewandten Seite über den Innenfräsarm 30 hinaus. Hierdurch ergeben sich die im Folgenden noch näher beschriebenen Vorteile.

Die Bearbeitung der Kanten der Verzahnung erfolgt in allen Ausführungsbeispielen so, dass nach dem Laden des innenverzahnten Werkstücks zunächst ein Vermessen der Verzahnung über den Sensor 60 erfolgt, um den Anfasfräser in die Verzahnung einfädeln bzw. einmitten zu können, siehe Fig. 4 und 13. Hierauf kann jedoch ggf. verzichtet werden, wenn die Position der Verzahnung bereits bekannt ist, bspw. weil das Werkstück in der selben Einspannung vorher verzahnbearbeitet wurde.

Das Anfasen der Kante der Verzahnung auf der Unterseite des Werkstücks erfolgt jeweils dadurch, dass das freie Ende des Innenfräsarms durch die Mittenöffnung des Werkstücks hindurch in die Werkstückaufnahme hinein verfahren wird, so dass sich die Werkzeugaufnahme für den Anfasfräser unterhalb der Kante befindet und der Anfasfräser daher schräg von unten mit der Kante in Eingriff gebracht werden kann, siehe Fig. 5, 8, 10 und 14.

Bei den in den gezeigten Ausführungsbeispielen wird der Anfasfräser auf seiner dem Bearbeitungskopf zugewandten Seite mit der Kante der Verzahnung auf der Unterseite des Werkstücks in Eingriff gebracht. Dies ist jedoch nicht zwingend. Bspw. könnte der Anfasfräser auch auf seiner von dem Bearbeitungskopf abgewandten Seite mit der Kante der Verzahnung auf der Unterseite des Werkstücks in Eingriff gebracht werden.

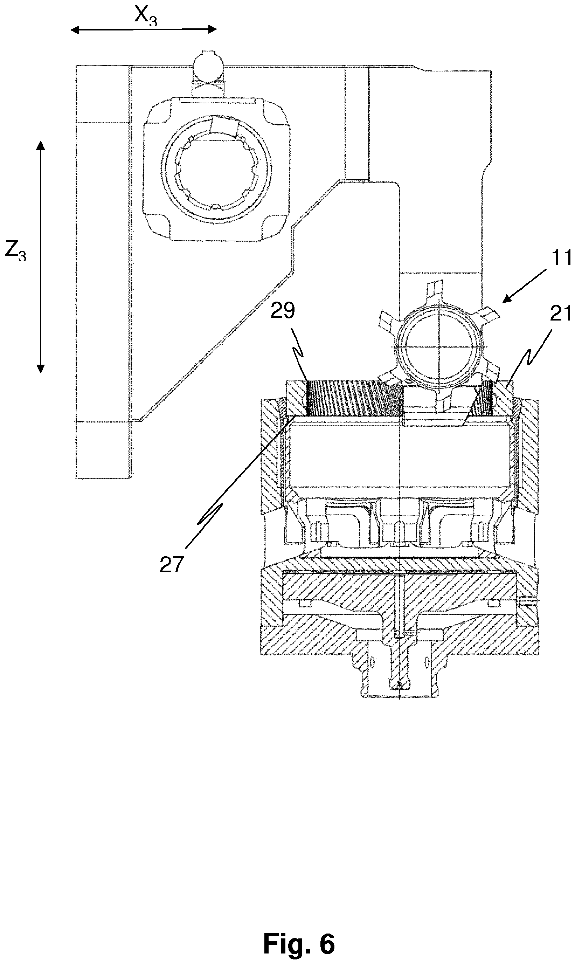

Zur Bearbeitung der Kante der Verzahnung auf der Oberseite des Werkstücks erfolgt, indem ein in einer Werkstückaufnahme des Innenfräsarms angeordneter Anfasfräser von schräg oben mit dieser Kante in Eingriff gebracht wird. Hierfür wird der Anfasfräser durch Verfahren des Fräsarms in den Bereich der Mittenöffnung des Werkstücks verfahren, so dass die Zähne des Anfasfräsers in die Mittenöffnung eintauchen. Hierfür taucht in den Ausführungsbeispielen auch das freie Ende des Innenfräsarms in die Mittenöffnung ein, siehe Figuren 6, 9, 11 und 15.

Je nach Ausführungsbeispiel wird der Anfasfräser mit der Kante der Verzahnung auf der Oberseite des Werkstücks auf seiner dem Bearbeitungskopf zugewandten Seite oder auf seiner von dem Bearbeitungskopf abgewandten Seite in Eingriff gebracht.

Die Bearbeitung der Kante der Verzahnung auf der Unterseite des Werkstücks kann vor oder nach der Bearbeitung der Kante der Verzahnung auf der Oberseite des Werkstücks erfolgen.

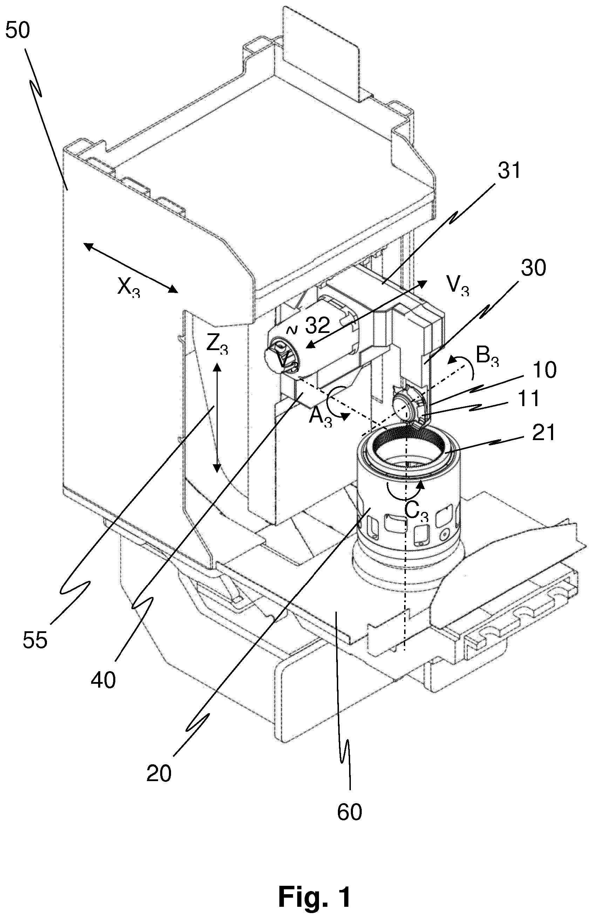

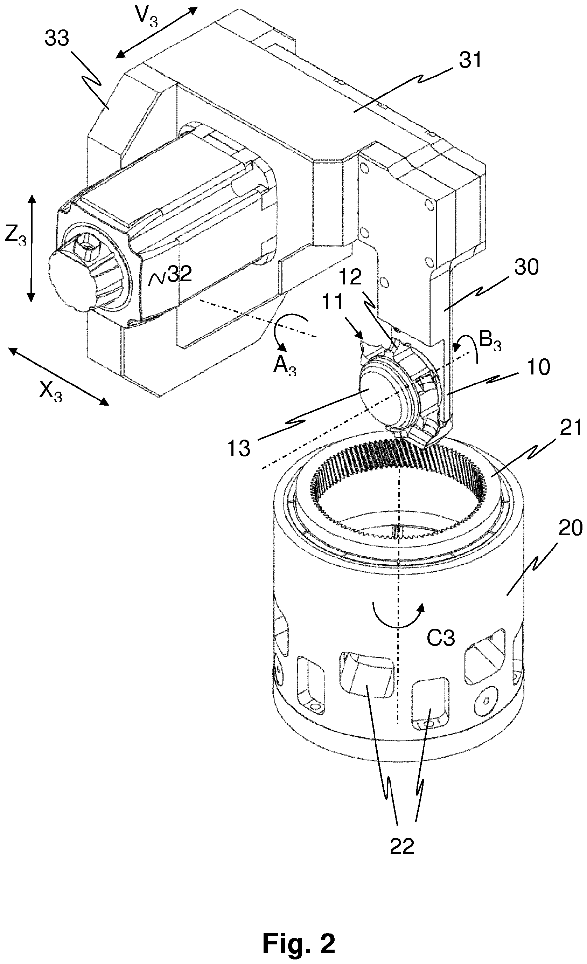

Gemäß einem zweiten Aspekt der vorliegenden Erfindung, welcher auch unabhängig von der Anfasbearbeitung von Innenverzahnungen, wie sie bisher beschrieben wurde, einsetzbar ist, erlaubt die vorliegende Erfindung das Anfasen der Kanten auf beiden Stirnseiten des Werkstücks mit dem selben Anfasfräser. Dieser zweite Aspekt wird im Folgenden anhand des in den Fig. 1 bis 6 dargestellten Ausführungsbeispiels, welches auch den ersten Aspekt der vorliegenden Erfindung verwirklicht, dargestellt. Er ist von diesem ersten Aspekt jedoch unabhängig.

Gemäß dem zweiten Aspekt wird der Anfasfräser 11 nach der Bearbeitung einer ersten Kante der Verzahnung auf einer ersten Seite des Werkstücks 21, bei dem Ausführungsbeispiel in Fig. 1 bis 6 nach der Bearbeitung der Kante der Unterseite, zu einem im Hinblick auf die Drehachse C3 der Werkstückaufnahme 20 gegenüberliegenden zweiten Kantenbereich der Verzahnung auf der anderen Seite des Werkstücks 21 verfahren. In Fig. 6 ist dies die Kante 29 der Verzahnung auf der Oberseite des Werkstücks 21. Diese zweite Kante wird dann mit der gleichen Drehrichtung des Werkzeugs bearbeitet wie die erste Kante. Durch die umgekehrte radiale Position relativ zum Werkstück 21 erfolgt die Bearbeitung der Kante jedoch mit der gleichen Schnittrichtung zwischen dem Anfasfräser und dem Werkstück, wobei die Drehrichtung des Werkstücks umgedreht werden muss. Im Ausführungsbeispiel erfolgt die Schneidbewegung dabei von der Stirnseite des Werkstücks aus in die Verzahnung hinein, und zwar sowohl bei der Bearbeitung der Kante 27 auf der Unterseite, als auch bei der Bearbeitung der Kante 29 auf der Oberseite. In einem alternativen Ausführungsbeispiel könnte die Bearbeitung der Kanten 27 und 29 auch jeweils aus der Verzahnung heraus in Richtung auf die jeweilige Stirnseite erfolgen.

Wird der zweite Aspekt zum Anfasen einer Innenverzahnung eingesetzt, und auch der erste Aspekt der vorliegenden Erfindung verwirklicht, wird der Anfasfräser 11 daher zwischen den Bearbeitungsschritten, mit welchen die erste Kante 27 und die zweite Kante 29 bearbeitet wird, sowohl in Richtung der Drehachse C3 der Werkstückaufnahme durch die Mittenöffnung des Werkstücks 21 hindurch verfahren als auch radial zur Drehachse C3 der Werkstückaufnahme durch die Mitte der Mittenöffnung verfahren, um den Anfasfräser 11 zum einen mit der Kante 27 auf der Unterseite in einer ersten radialen Position und zum anderen mit der Kante 29 auf der Oberseite in einer radial gegenüberliegenden Position in Eingriff zu bringen. Das Verfahren der Werkzeugaufnahme bzw. des Innenfräsarms erfolgt dabei bevorzugt über die Achsen Z3 und X3 des Bearbeitungskopfes.

Im Ausführungsbeispiel liegen sich die beiden radialen Positionen dabei in einer Richtung, welche senkrecht auf der Drehachsen B3 der Werkzeugaufnahme steht, gegenüber, d.h. der Anfasfräser wird auf seiner dem Bearbeitungskopf zugewandten bzw. abgewandten Seite mit den Kanten in Eingriff gebracht.

Wie aus Fig. 6 ersichtlich, ist hierfür der Innenfräsarm 30 so ausgestaltet, dass die Zähne 12 des Anfasfräsers 11 auf zwei Seiten mit der Innenverzahnung des Werkstücks 21 in Eingriff gebracht werden können.

Der zweite Aspekt der vorliegenden Erfindung, welcher ein Anfasen der Kanten auf beiden Stirnseiten des Werkstücks mit dem selben Anfasfräser und der gleichen Schnittrichtung relativ zum Werkstück ermöglicht, ist jedoch nicht auf Innenverzahnungen beschränkt. Vielmehr ist das gleiche Prinzip auch bei der Bearbeitung von Außenverzahnungen einsetzbar.

Auch hierfür muss das Werkzeug, d.h. der Anfasfräser 11, auf zwei gegenüberliegenden Seiten mit der Verzahnung in Eingriff der gebracht werden können. Beispielsweise kann die Werkzeugaufnahme hierfür ebenfalls an einem Fräsarm angeordnet werden. Alternativ oder zusätzlich kann der Anfasfräser auf einem langen Werkzeugdorn angeordnet werden.

Anders als bei der Bearbeitung einer Innenverzahnung kann der Anfasfräser jedoch nicht durch die Mitte des Werkstücks hindurch verfahren werden, sondern muss um dieses herum verfahren werden. Dies kann durch Verfahren des Werkzeugs in Richtung der Drehachse des Werkstücks erfolgen, wenn dieses nur einseitig eingespannt ist, und/oder in Umfangsrichtung um das Werkstück herum.

Bei dem in Fig. 1 bis 6 dargestellten ersten Ausführungsbeispiel der vorliegenden Erfindung, welches sowohl den ersten, als auch den zweiten Aspekt der vorliegenden Erfindung verwirklicht, ist lediglich ein Innenfräsarm mit einer Werkzeugaufnahme vorgesehen.

Da das in der Werkzeugaufnahme aufgenommene Werkzeug gemäß dem zweiten Aspekt zur Bearbeitung der Kanten auf der Ober- und Unterseite eingesetzt werden kann, sind weitere Werkzeugaufnahmen oder Innenfräsarme für eine Vielzahl von Anwendungsfällen nicht notwendig.

Die vorliegende Erfindung umfasst jedoch weitere Ausgestaltungen, welche mehrere Innenfräsarme und/oder Werkzeugaufnahmen aufweisen, und im folgenden näher dargestellt werden.

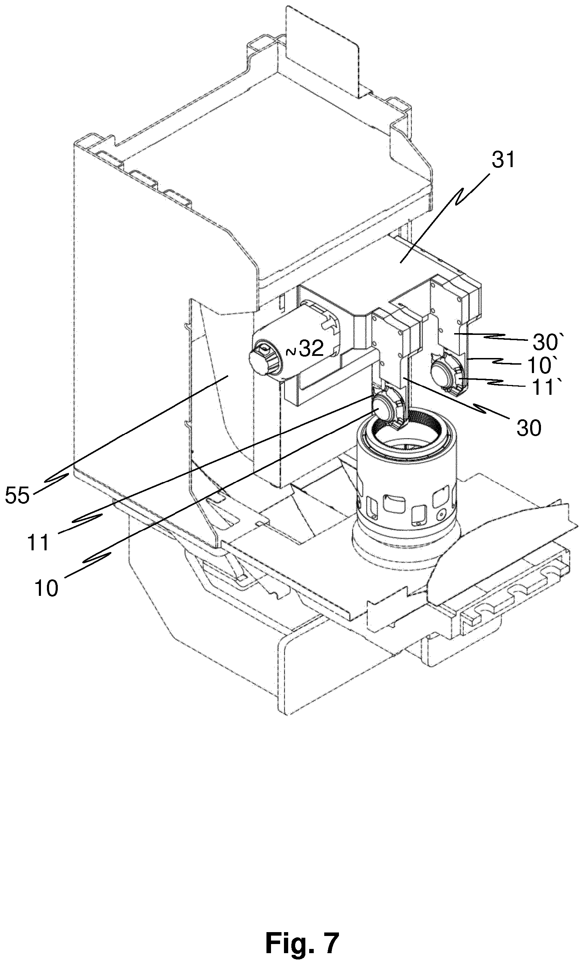

Das in Fig. 7 bis 11 gezeigte Ausführungsbeispiel zeigt eine Ausgestaltung mit zwei separaten Innenfräsarmen 30 und 30'. Diese sind an einer gemeinsamen Halterung 31 angeordnet. Der Aufbau und der Einsatz der Innenfräsarme 30 und 30' entspricht dem ersten Ausführungsbeispiel in Fig. 1 bis 6, so dass auf die dortige Beschreibung verwiesen wird. Gleiches gilt für die übrigen Komponenten der Vorrichtung.

Die beiden Innenfräsarme 30 und 30' sind beabstandet an der Halterung 31 angeordnet. Die Anordnung erfolgt im Ausführungsbeispiel so, dass die Drehachsen der beiden Werkzeugaufnahmen 10 und 10' der beiden Innenfräsarme 30 und 30' parallel verlaufen und bevorzugt miteinander fluchten.

Im Ausführungsbeispiel ist ein gemeinsamer Antrieb 32 für die Werkzeugaufnahmen 10 und 10' der beiden Innenfräsarme vorgesehen. Alternativ wären auch getrennte Antriebe denkbar. Weiterhin wäre es ebenfalls denkbar, jeweils separate Halterungen 31 für die beiden Innenfräsarme vorzusehen und diese lediglich nebeneinander am Bearbeitungskopf 40 anzuordnen.

Erster Anwendungsfall für das Ausführungsbeispiel mit zwei Innenfräsarmen besteht in der Bearbeitung unterschiedlicher Werkstücke ohne einen zwischenzeitlichen Werkzeugwechsel. Insbesondere kann am ersten Innenfräsarm 30 ein Anfasfräser 11 zum Bearbeiten eines ersten Werkstücks, am zweiten Innenfräsarm 30' ein zweiter Anfasfräser 11' zum Bearbeiten eines zweiten Werkstücks mit einer anderen Verzahngeometrie angeordnet werden. Der erste Innenfräsarm kann dann zum Bearbeiten des ersten Werkstücks, der andere Innenfräsarm zum Bearbeiten des anderen Werkstücks eingesetzt werden. Hierzu muss lediglich durch Verfahren der V3-Achse der jeweilige Innenfräsarm mit dem Werkstück in Eingriff gebracht werden.

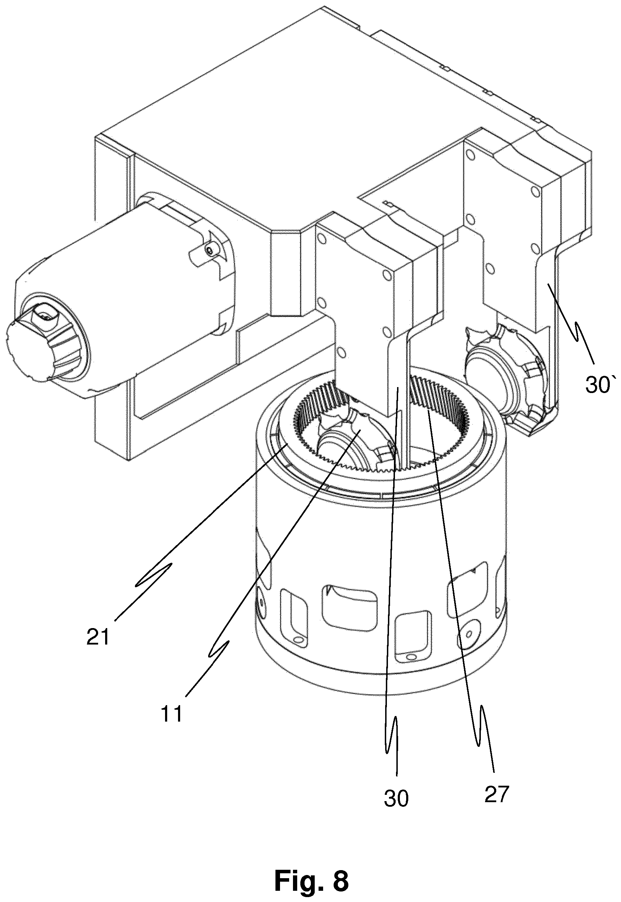

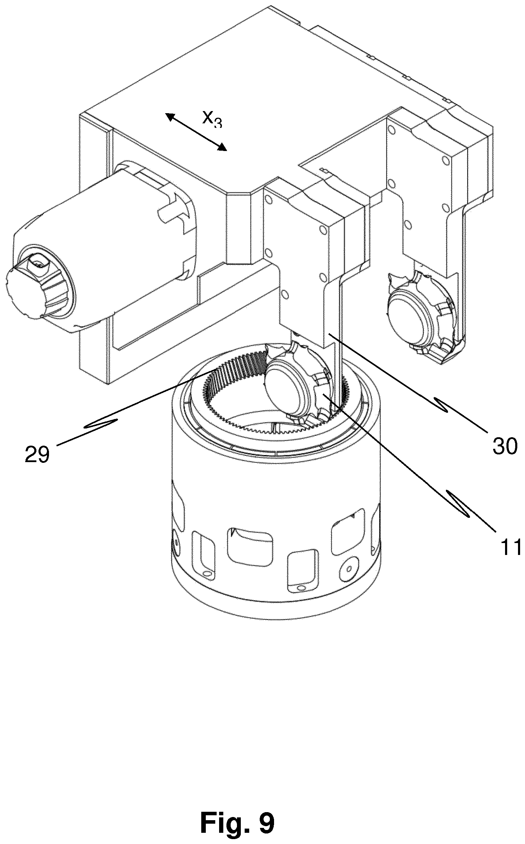

Die Bearbeitung der Kanten auf Unter- und Oberseite der jeweiligen Werkstücke kann in diesem Fall gemäß dem zweiten Aspekt der vorliegenden Erfindung erfolgen, wie dies bereits oben im Hinblick auf das Ausführungsbeispiel in Fig. 1 bis 6 näher beschrieben wurde. Dies ist in Fig. 8 bis 10 dargestellt. Fig. 8 zeigt die Bearbeitung der Unterkante eines ersten Werkstücks 21 über den am ersten Innenfräsarm 30 aufgenommenen ersten Anfasfräser 11, und Fig. 9 die Bearbeitung der Oberkante 29 des ersten Werkstücks 21 über den gleichen Innenfräsarm 30 und Anfasfräser 11, wobei dieser hierfür durch die Mitte der Mittenöffnung radial verfahren wurde.

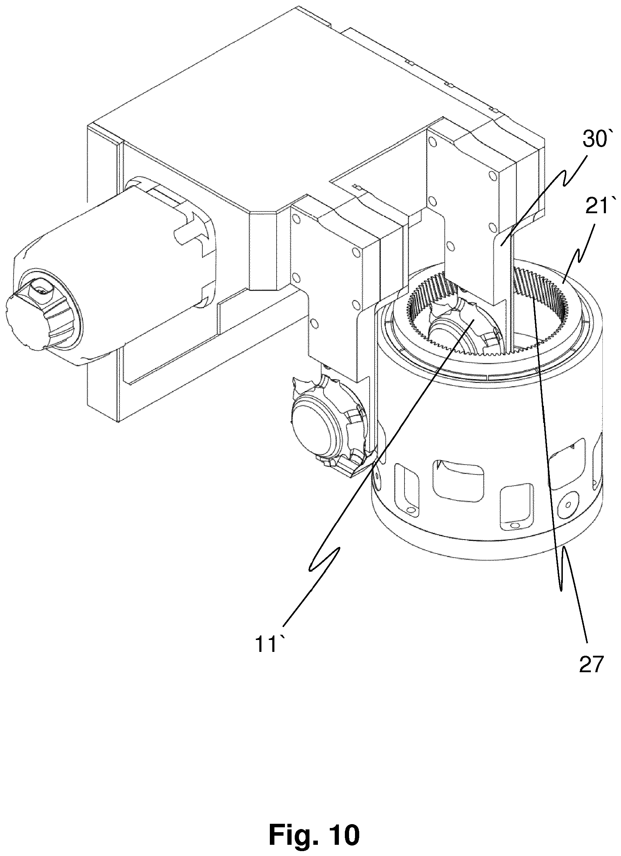

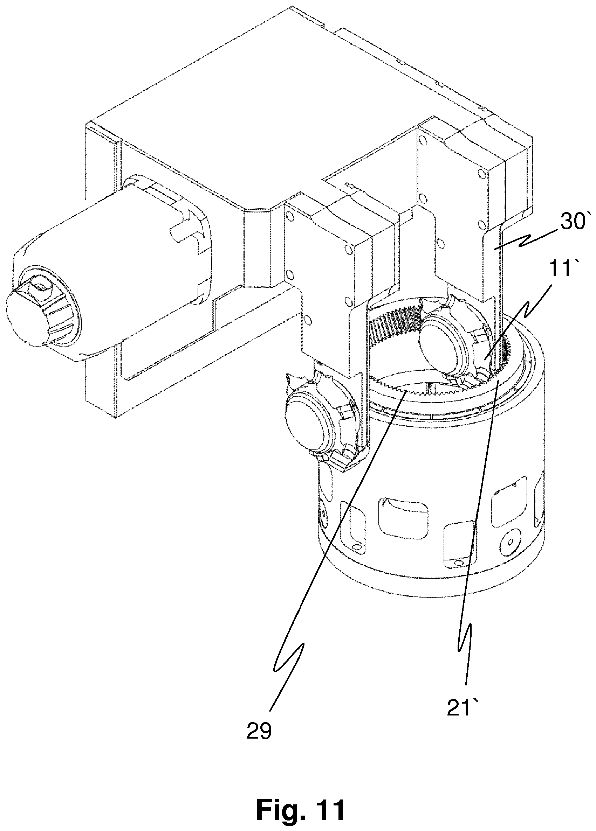

Fig. 10 und 11 zeigen in gleicher Weise die Bearbeitung der Unterkante 27 und der Oberkante 29 eines zweiten Werkstücks 21 durch den am zweiten Innenfräsarm 30' aufgenommenen zweiten Anfasfräser 11'.

Alternativ können die beiden Innenfräsarme 30 und 30' auch dazu eingesetzt werden, um mit dem einen Innenfräsarm 30 die Unterkante 27 eines Werkstücks, und mit dem anderen Innenfräsarm 30' die Oberkante 29 des gleichen Werkstücks 21 zu bearbeiten. In diesem Fall arbeiten die Anfasfräser der beiden Innenfräsarme bevorzugt mit umgekehrten Drehrichtungen, um so die gleiche Schnittrichtung bezüglich der Verzahnung zu erreichen.

Der Einsatz zweier Innenfräsarme zur Bearbeitung der Unter- und Oberkante des gleichen Werkstücks ist insbesondere dann von Vorteil, wenn aufgrund eines großen Innendurchmessers des zu bearbeitenden Werkstücks ein Verfahren des Anfasfräsers durch die Mitte der Verzahnung zur radial gegenüberliegenden Seite nicht möglich ist.

Der Einsatz zweier Innenfräsarme zur Bearbeitung der Unter- und Oberkante des gleichen Werkstücks ist auch dann von Vorteil, wenn die Geometrie des Werkstücks unterschiedliche Anfasfräser zum Bearbeiten der Unter- und Oberkante erfordert. Dies kann beispielsweise bei konischen Verzahnungen wie Beveloids oder Werkstücken mit schrägen Stirnseiten der Fall sein.

Beiden Anwendungsfällen des in Fig. 7 bis 11 dargestellten zweiten Ausführungsbeispiels der vorliegenden Erfindung mit zwei Innenfräsarmen ist gemeinsam, dass der eine Innenfräsarm außerhalb der Verzahnung angeordnet ist, wenn der andere Innenfräsarm in die Mittenöffnung der Verzahnung eintaucht, um eine Kante der Verzahnung zu bearbeiten. Hierdurch ergeben sich gewisse Restriktionen im Hinblick auf die Anwendungsmöglichkeiten.

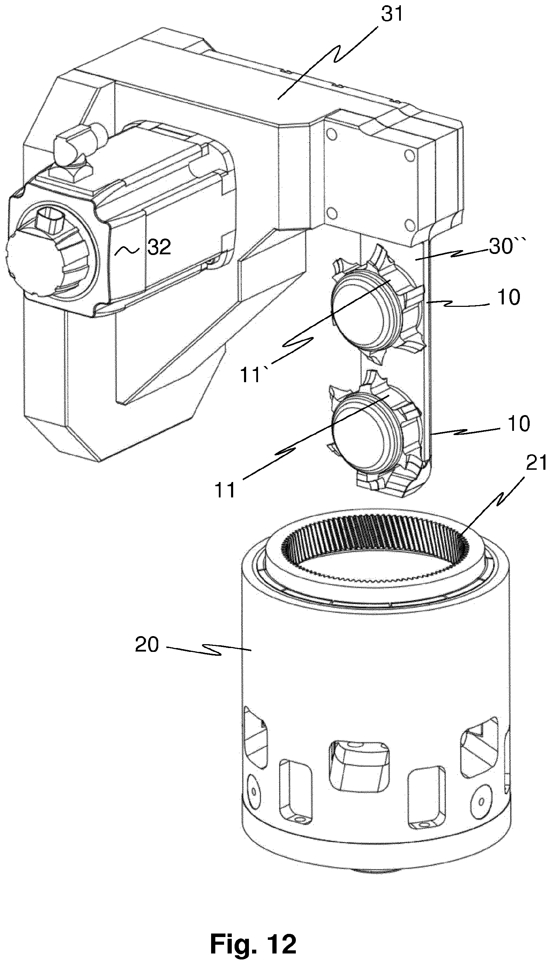

In Fig. 12 bis 15 ist ein drittes Ausführungsbeispiel der vorliegenden Erfindung gezeigt, bei welchem zwei Werkzeugaufnahmen 10 und 10' am gleichen Innenfräsarm 30" angeordnet sind.

Die beiden Werkzeugaufnahmen 10 und 10' sind im Ausführungsbeispiel entlang des Innenfräsarms 30" übereinander angeordnet. Die an den Werkzeugaufnahmen 10 und 10' aufgenommenen Anfasfräser 11 und 11' dienen bevorzugt zur Bearbeitung der Unter- und Oberkante eines Werkstücks 21.

Das dritte Ausführungsbeispiel weist zusätzlich zu der weiteren Werkzeugaufnahme am Innenfräsarm weiterhin einen etwas tieferen Topf der Werkstückaufnahme auf, um den unteren Anfasfräser aufzunehmen, wenn der obere Anfasfräser zum Bearbeiten der Kante auf der Oberseite eingesetzt wird.

Ansonsten unterscheidet sich das dritte Ausführungsbeispiel nicht von dem in Fig. 1 bis 6 dargestellten zweiten Ausführungsbeispiel, sodass zunächst auf die dortige Beschreibung verwiesen wird.

Die beiden Werkzeugaufnahmen 10 und 10' sind über einen Antriebsstrang gemeinsam mit dem Antrieb 32 antriebsverbunden. Bei der Bearbeitung der jeweiligen Kantenbereiche arbeiten die beiden Anfasfräser jedoch bevorzugt mit umgekehrten Drehrichtungen.

Fig. 13 zeigt dabei zunächst das Eintauchen des freien Endes mit dem Sensor 60 in die Verzahnung, um ein Einfädeln bzw. Einmitten der Anfasfräser in die Verzahnung vornehmen zu können.

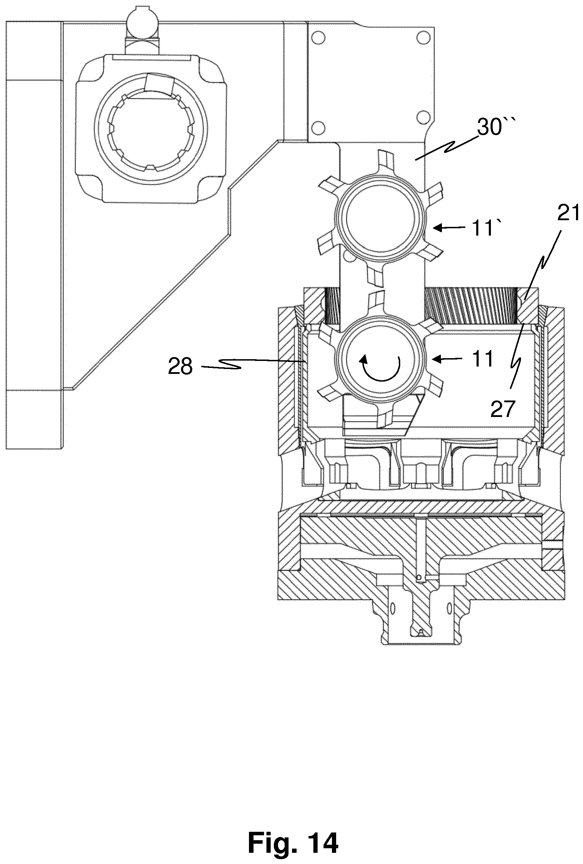

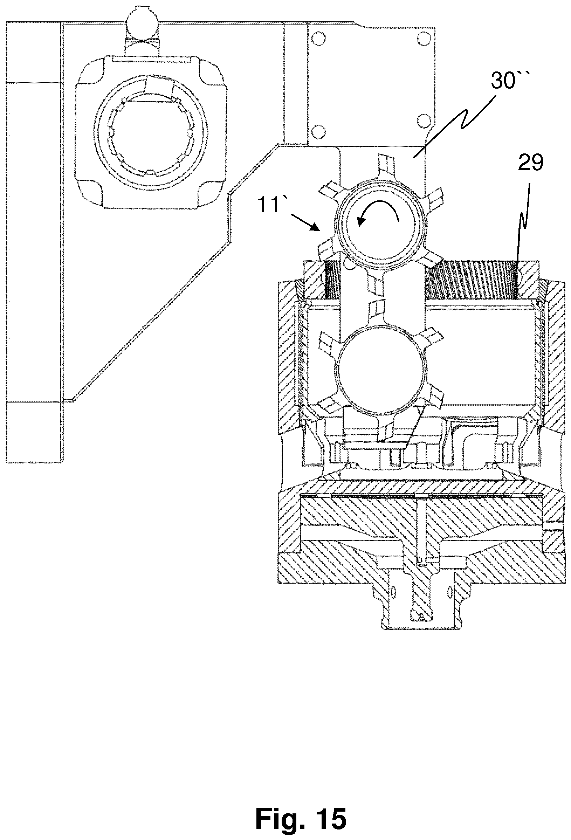

Fig. 14 zeigt dann die Bearbeitung der Kante 27 auf der Unterseite des Werkstücks 21 durch den unteren Anfasfräser 11. Fig. 15 zeigt die Bearbeitung der Kante 29 auf der Oberseite des Werkstücks 21 durch den oberen Anfasfräser 11'. Die Bearbeitung erfolgt mit jeweils umgekehrter Drehrichtung, sodass sich die gleiche Schnittrichtung relativ zur Verzahnung ergibt.

Zwischen den beiden Bearbeitungsschritten erfolgt ein Verfahren des Innenfräsarms 30" in Richtung der Drehachse C3 der Werkstückaufnahme, um den einen Fräser außer Eingriff mit der ihm zugeordneten Kante zu bringen und den anderen Fräser in Eingriff mit der anderen Kante.

Wie in Fig. 14 und 15 ersichtlich, erfolgt die Bearbeitung der Kanten durch beide Fräser auf der gleichen radialen Seite des Werkstücks, und insbesondere auf der dem Bearbeitungskopf zugewandten Seite.

Das dritte Ausführungsbeispiel kann daher auch bei Werkstücken mit einem sehr großen Innendurchmesser eingesetzt werden, bei welchem ein Verfahren durch die Mitte in radialer Richtung, wie dies gemäß dem zweiten Aspekt der vorliegenden Erfindung vorgesehen ist, nicht mehr möglich ist.

Alternativ zum dritten Ausführungsbeispiel in Fig. 14 und 15 wäre jedoch auch beim Einsatz des dort gezeigten Innenfräsarms mit zwei Werkzeugaufnahme ein Fahren durch die Mitte des Werkstücks gemäß dem zweiten Aspekt möglich. In diesem Fall würden die beiden Anfasfräser bevorzugt mit der gleichen Drehrichtung arbeiten.

Das dritte Ausführungsbeispiel sowie die soeben beschriebene Alternative eignet sich insbesondere für Fälle, in welchen aufgrund der Geometrie des Werkstücks unterschiedliche Anfasfräser für die Kanten auf Ober- und Unterseite eingesetzt werden müssen.

In einem vierten, in den Figuren nicht dargestellten Ausführungsbeispiel kann eine Bearbeitung der Kanten auf Ober- und Unterseite des Werkstücks mit demselben Anfaswerkzeug alternativ zum zweiten Aspekt der vorliegenden Erfindung dadurch erreicht werden, dass die Werkzeugaufnahme 10 bei dem in Fig. 1 bis 6 dargestellten Ausführungsbeispiel um eine zur ihrer Drehachse B3 senkrechte Schwenkachse drehbar ist. Statt eines Verfahrens der Werkzeugaufnahme in radialer Richtung bezüglich der Drehachse der Werkstückaufnahme zur gegenüberliegenden Seite des Werkstücks kann daher die Werkzeugaufnahme mit dem Anfasfräser gedreht werden, um in der gleichen radialen Position die andere Kante des Werkstücks zu bearbeiten.

Beispielsweise wäre es dabei denkbar, den unteren Teil des Innenfräsarms 30 mit der Werkstückaufnahme 10 gegenüber dem oberen Teil des Innenfräsarms oder der Verbindung mit der Halterung 31 drehbar auszugestalten. Insbesondere kann dabei eine Drehachse vorgesehen sein, welche parallel zur Hauptrichtung des Innenfräsarms 30 verläuft. Der durch den Innenfräsarm verlaufende Antriebsstrang muss entsprechend so ausgestaltet werden, dass ein Antrieb der Werkzeugaufnahme in beiden Schwenkstellungen möglich ist.

Eine solche Schwenkachse könnte als Stellachse ausgeführt sein, welche ein Verschwenken des vorderen Teils des Innenfräsarms mit der Werkzeugaufnahme 10 zwischen den beiden für die Bearbeitung der Unterkante und der Oberkante notwendigen Positionen erlaubt.

Auch unabhängig von den konkreten Ausführungsbeispielen wird im Rahmen der vorliegenden Erfindung bevorzugt ein Chamfer-Cut-Fräser als Anfasfräser eingestaltet. Ein Chamfer-Cut-Fräser ist ein scheibenförmiges Entgratwerkzeug 11, welches am Umfang Schneidzähne 12 und Spannuten aufweist, bevorzugt mit jeweils gleichem Umfangsabstand.

Bevorzugt ist das Profil der Schneidzähne 12 des Chamfer-Cut-Fräsers spezifisch für die Anfasbearbeitung der Kante einer Innenverzahnung ausgelegt.

Die Schneidzähne haben einen in Umfangsrichtung schraubenlinienförmigen Verlauf. Der Chamfer-Cut-Fräser ist mehrgängig, wobei pro Gang ein Zahn vorgesehen ist. Die an der in Drehrichtung vorderen Seite der Zähne ausgebildeten Schneidkanten liegen jedoch auf einem gemeinsamen Flugkreis. Zum Anfasen einer Kante mit dem Chamfer-Cut-Fräser wird die Drehbewegung zwischen dem Chamfer-Cut-Fräser und dem Werkstück so synchronisiert, dass jeweils ein Zahn mit einer Zahnlücke des Werkstücks zusammentrifft.

Bei einem gradverzahnten Zahnrad ist das Profil der Schneidkanten der Schneidzähne symmetrisch zur Mittenebene des Entgratwerkzeugs. Beim schräg verzahnten Zahnrad ist es entgegen unsymmetrisch.

Zum Anfasen wird der Chamfer-Cut-Fräser 11 in eine Position gebracht, wie dies in Fig. 5 wiedergegeben ist. Während der Bearbeitung der Stirnkanten der Zahnnuten drehen das Werkstück 21 und der Chamfer-Cut-Fräser 11 in einem vorgegebenen Drehzahlverhältnis, so dass jeweils ein Schneidzahn 12 die Stirnkanten einer Zahnnut bearbeitet. Es versteht sich, dass der Chamfer-Cut-Fräser 11 bzw. die Zähne 12 entsprechend den Parametern der Verzahnung des Werkstücks 21 ausgelegt sind, damit der gewünschte Eingriff mit den Stirnkanten der Zahnnuten erfolgen kann.

Die erfindungsgemäße Vorrichtung weist eine Steuerung auf, durch welche die Drehachsen von Werkzeugaufnahme und Werkstückaufnahme sowie die Maschinenachsen zur Verstellung der relativen Position zwischen Werkzeugaufnahme und Werkstückaufnahme angesteuert werden. Die Steuerung steuert die erfindungsgemäße Vorrichtung bevorzugt automatisch an. Insbesondere ist sie dabei so programmiert, dass die oben näher beschriebenen Verfahren bzw. Anwendungsweisen der erfindungsgemäßen Vorrichtung automatisiert durchgeführt werden.

Die erfindungsgemäße Vorrichtung zum Anfasen von Werkstücken kann in einem Bearbeitungszentrum in Kombination mit einer Verzahnmaschine eingesetzt werden, welche zuvor die Verzahnung am Werkstück erzeugt. Bevorzugt handelt es sich bei der Verzahnmaschine um eine Maschine zur Bearbeitung von Innenverzahnungen, insbesondere um eine Fräsmaschine oder eine Verzahnungsstoßmaschine oder um eine Wälzschab-Maschine.
Die Verzahnmaschine und die erfindungsgemäße Vorrichtung können jeweils separate Werkstückaufnahmen aufweisen, wobei ein Werkstückwechsler vorgesehen ist, um die Werkstücke von der Verzahnmaschine zur erfindungsgemäßen Vorrichtung zum Anfasen zu transportieren. Alternativ können die Werkstücke auf einer Werkstückaufnahme eingespannt verbleiben und auf der Werkstückaufnahme von der Verzahnmaschine zur erfindungsgemäßen Vorrichtung transportiert werden.

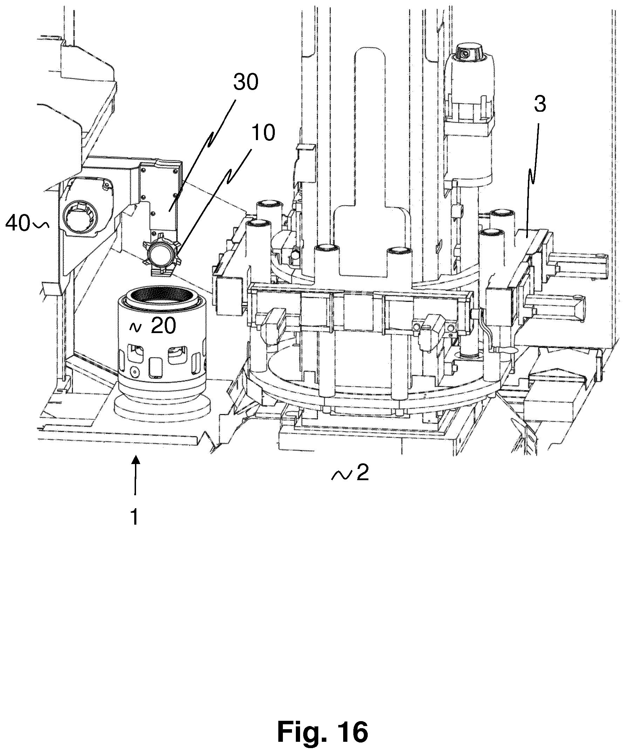

In Fig. 16 ist ein Ausführungsbeispiel eines Verzahnzentrums gezeigt, wobei links die erfindungsgemäße Vorrichtung 1 gemäß dem ersten Ausführungsbeispiel dargestellt ist. Es könnten jedoch auch alle anderen Ausführungsbeispiele der vorliegenden Erfindung eingesetzt werden.

Die Werkstückaufnahme 20 ist im Ausführungsbeispiel fest der erfindungsgemäßen Vorrichtung zugeordnet, und wird über einen Ringlader 3 mit Werkstücken bestückt. Die in Fig. 16 nicht dargestellte Verzahnmaschine ist an einer anderen Winkelposition 2, beispielsweise in einem Winkel von 90° zur erfindungsgemäßen Vorrichtung 1, relativ zum Ringlader 3 angeordnet. Der Ringlader 3 kann daher in der Verzahnmaschine verzahnte Werkstücke zur erfindungsgemäßen Vorrichtung transportieren. Gegebenenfalls können die Werkstücke auch wieder zurück zur Verzahnmaschine transportiert werden, beispielsweise um ein Anfasen zwischen einem Schruppschritt und einem Schlichtschritt zu ermöglichen.

## Patentansprüche

1. Vorrichtung zum Anfasen mindestens einer stirnseitigen Kante der Verzahnung eines innenverzahnten Werkstücks (21) mit mindestens einer drehbar gelagerten Werkstückaufnahme (20) zur Aufnahme des Werkstücks und mit mindestens einer drehbar gelagerten Werkzeugaufnahme (10) zur Aufnahme mindestens eines scheibenförmigen Anfasfräsers (11), welcher am Umfang Schneidzähne und Spannuten aufweist,
wobei die Werkzeugaufnahme an einem Innenfräsarm (30) der Vorrichtung angeordnet ist,
**dadurch gekennzeichnet, dass** die Vorrichtung eine Steuerung zur automatischen Ansteuerung der Maschinenachsen aufweist, welche so programmiert ist, dass das freie Ende des Innenfräsarms (30) durch eine Maschinenachse der Vorrichtung zumindest teilweise in die durch die Innenverzahnung des Werkstücks (21) gebildete Mittenöffnung hinein verfahren wird, um die Kante einer Verzahnung auf mindestens einer und bevorzugt beiden Stirnseiten des Werkstücks (21) mittels des scheibenförmigen Anfasfräsers (11) anzufasen.

2. Vorrichtung nach Anspruch 1, wobei das freie Ende des Innenfräsarms (30) so in die Mittenöffnung hinein verfahren werden, dass der Anfasfräser (11) zumindest teilweise in die Mittenöffnung eintaucht, um eine Kante der Verzahnung zu bearbeiten, wobei bevorzugt die Werkzeugaufnahme durch die Mittenöffnung des Werkstücks hindurch verfahrbar ist, um den Anfasfräser mit einer Kante (27) der Verzahnung auf der Unterseite des Werkstücks in Eingriff zu bringen.

3. Vorrichtung nach einem der vorangegangenen Ansprüche, wobei die Werkstückaufnahme (20) eine topfförmige Vertiefung aufweist und ein Verfahren des Anfasfräsers unter die Kante (27) der Verzahnung auf der der topfförmigen Vertiefung zugewandten Unterseite des Werkstücks erlaubt, wobei die topfförmige Vertiefung der Werkstückaufnahme bevorzugt Aussparungen zur Abtransport von Spänen und/oder Kühlmittel aufweist und/oder an ihrem oberen Rand Spannbacken zum Einspannen des Werkstücks und/oder eine Auflagekante für die Unterseite des Werkstücks aufweist.

4. Vorrichtung nach einem der vorangegangenen Ansprüche, wobei sich die Maschinenachse, über welche das freie Ende des Innenfräsarms (30) in die Mittenöffnung hinein verfahrbar ist, nicht in die Mittenöffnung des Werkstücks hinein erstreckt und bevorzugt oberhalb oder neben der Werkstückaufnahme angeordnet ist, wobei die Maschinenachse bevorzugt ein Verfahren des Innenfräsarms in Achsrichtung der Werkstückaufnahme ermöglicht.

5. Vorrichtung nach einem der vorangegangenen Ansprüche, wobei in dem Innenfräsarm (30) ein Antriebsstrang verläuft, welcher einen rumpfseitig angeordnetem Antrieb durch den Innenfräsarm hindurch mit der am Innenfräsarm angeordneten Werkzeugaufnahme (10) verbindet, wobei der Antriebsstrang bevorzugt eine Mehrzahl von miteinander kämmenden, entlang des Innenfräsarms angeordneten Zahnrädern und/oder einen sich innerhalb des Innenfräsarms erstreckenden Riemen- und/oder Kettenantrieb aufweist.

6. Vorrichtung nach einem der vorangegangenen Ansprüche, wobei der Werkzeugdorn der Werkzeugaufnahme (10) nur einen Anfasfräser (11) trägt, und/oder wobei die Breite des Innenfräsarms inklusive Werkzeugdorn entlang der Achse der Werkzeugaufnahme weniger als das 10-fache der Breite des Anfasfräsers beträgt, bevorzugt weniger als das 5-fache, und/oder wobei die Breite des Werkzeugdorns bevorzugt weniger als das 5-fache der Breite des Anfasfräsers beträgt, bevorzugt weniger als das 3-fache.

7. Vorrichtung nach einem der vorangegangenen Ansprüche, mit einem bevorzugt an dem Innenfräsarm (30) angeordneten Sensor (60) zum Einfädeln und/oder Einmitten des Anfasfräsers in die Innenverzahnung des Werkstücks, wobei der Sensor bevorzugt am freien Ende des Innenfräsarms unterhalb der Werkzeugaufnahme angeordnet ist und/oder berührungslos arbeitet, und/oder mit zwei Werkzeugaufnahmen zum Aufnehmen von Anfasfräsern, insbesondere von Chamfer-Cut-Fräsern, welche übereinander entlang des Innenfräsarms angeordnet sind,
und/oder mit zwei Werkzeugaufnahmen zum Aufnehmen von Anfasfräsern, insbesondere von Chamfer-Cut-Fräsern, welche an separaten Innenfräsarmen angeordnet sind, welche bevorzugt in Achsrichtung der Werkzeugaufnahmen voneinander beabstandet an einem Bearbeitungskopf angeordnet sind und/oder parallel zueinander verlaufen.

8. Vorrichtung nach einem der vorangegangenen Ansprüche, wobei die Werkzeugaufnahme (10) über eine zu ihrer Drehachse (B3) senkrechte Schwenkachse (A3) um 180 ° drehbar ist, wobei die Schwenkachse bevorzugt am Innenfräsarm angeordnet ist und weiter bevorzugt ein Schwenken eines unteren Teils des Innenfräsarms mit der Werkstückaufnahme gegenüber einem oberen Teil des Innenfräsarms oder einer Verbindung mit der Halterung zu ermöglichen.

9. Vorrichtung, insbesondere nach einem der vorangegangenen Ansprüche, zum Anfasen mindestens einer stirnseitigen Kante einer Verzahnung eines verzahnten Werkstücks (21) mit mindestens einer drehbar gelagerten Werkstückaufnahme (20) zur Aufnahme des Werkstücks und mit mindestens einer drehbar gelagerten Werkzeugaufnahme (10) zur Aufnahme mindestens eines scheibenförmigen Anfasfräsers (11), welcher am Umfang Schneidzähne und Spannuten aufweist, wobei die Werkzeugaufnahme (10) über mindestens eine Maschinenachse relativ zur Werkstückaufnahme verfahrbar ist,
**gekennzeichnet durch**
eine Steuerung zur automatischen Ansteuerung der Maschinenachsen zum Anfasen der Kante einer Verzahnung auf beiden Stirnseiten des Werkstücks, welche so programmiert ist, dass ein Anfasen der Kanten der Verzahnung auf beiden Stirnseiten des Werkstücks (21) mit dem selben Anfasfräser (11) erlaubt, indem ein in der Werkzeugaufnahme (10) aufgenommener scheibenförmiger Anfasfräser in einer bezüglich der Drehachse (C3) der Werkstückaufnahme ersten radialen Richtung mit einem Kantenbereich der Verzahnung auf einer ersten Seite des Werkstücks (21) in Eingriff gebracht wird und durch Verfahren der Werkzeugaufnahme relativ zur Werkstückaufnahme, welches im Falle eines außenverzahnten Werkstücks ein Verfahren der Werkzeugaufnahme mit dem Anfasfräser um das Werkstück herum und im Falle eines innenverzahnten Werkstücks ein Verfahren in radialer und in axialer Richtung durch die Mittenöffnung der Verzahnung hindurch umfasst, in einer bezüglich der Drehachse (C3) der Werkstückaufnahme zweiten radialen Richtung mit einem radial gegenüberliegenden Kantenbereich der Verzahnung auf der zweiten Seite des Werkstücks (21) in Eingriff gebracht wird.

10. Vorrichtung nach Anspruch 9, wobei die Werkzeugaufnahme an einem Fräsarm (30) angeordnet ist, wobei ein in der Werkzeugaufnahme aufgenommener Anfasfräser (11) von zwei sich bezüglich der Drehachse der Werkzeugaufnahme gegenüberliegenden Seiten aus zugänglich ist, so dass er mit der ersten Seite mit dem Kantenbereich auf der Oberseite des Werkstücks und mit der zweiten Seite mit dem Kantenbereich (27) auf der Unterseite des Werkstücks in Eingriff gebracht werden kann, wobei das Anfaswerkzeug bevorzugt auf den beiden Seiten mit seinem Radius über die Werkzeugaufnahme und den Fräsarm hinausragt.

11. Vorrichtung nach einem der vorangegangenen Ansprüche, mit mindestens einem in der Werkzeugaufnahme aufgenommenen Anfasfräser, insbesondere mit mindestens einem in der Werkzeugaufnahme aufgenommenen Chamfer-Cut-Fräser.

12. Verzahnbearbeitungszentrum mit einer Vorrichtung (1) nach einem der vorangegangenen Ansprüche, einer Verzahnmaschine und einem Werkstückwechsler (3), wobei es sich bei der Verzahnmaschine bevorzugt um eine Verzahnungsfräsmaschine oder eine Verzahnungsstoßmaschine und/oder eine Wälzschälmaschine handelt, und/oder wobei die Verzahnbearbeitung und das Anfasen der Werkstücke taktzeit-parallel erfolgen, und/oder wobei es sich bei dem Werkstückwechsler (3) um eine Ring-Automation handelt und die Vorrichtung nach einem der vorangegangenen Ansprüche und die Verzahnmaschine an unterschiedlichen Winkelpositionen der Ring-Automation angeordnet sind.

13. Verfahren zum Anfasen mindestens einer stirnseitigen Kante einer Verzahnung eines innenverzahnten Werkstücks (21), insbesondere durch eine Vorrichtung nach einem der vorangegangenen Ansprüche, durch einen in einer drehbar gelagerten Werkzeugaufnahme (10) aufgenommenen scheibenförmigen Anfasfräser (11), welcher am Umfang Schneidzähne und Spannuten aufweist,
**dadurch gekennzeichnet,**
**dass** die Werkzeugaufnahme (10) an einem Innenfräsarm (30) angeordnet ist, dessen freies Ende zur Anfasbearbeitung zumindest teilweise in die durch die Innenverzahnung des Werkstücks (21) gebildete Mittenöffnung hinein verfahren wird, wobei bevorzugt die Werkzeugaufnahme durch Verfahren des Innenfräsarms durch die Mittenöffnung des Werkstücks hindurch verfahren wird, um den Anfasfräser mit einer Kante (27) der Verzahnung auf der Unterseite des Werkstücks in Eingriff zu bringen.

14. Verfahren zum Anfasen mindestens einer stirnseitigen Kante einer Verzahnung eines verzahnten Werkstücks (21), insbesondere durch eine Vorrichtung nach einem der vorangegangenen Ansprüche, durch einen in einer drehbar gelagerten Werkzeugaufnahme (10) aufgenommenen scheibenförmigen Anfasfräser (11), welcher am Umfang Schneidzähne und Spannuten aufweist,
**dadurch gekennzeichnet,**
**dass** ein Anfasen der Kanten der Verzahnung auf beiden Stirnseiten des Werkstücks (21) mit dem selben Anfasfräser (11) erfolgt, indem ein in der Werkzeugaufnahme (10) aufgenommener Anfasfräser (11) in einer bezüglich der Drehachse (C3) des Werkstücks ersten radialen Richtung mit einem Kantenbereich der Verzahnung auf einer ersten Seite des Werkstücks in Eingriff gebracht wird und durch Verfahren der Werkzeugaufnahme relativ zum Werkstück, welches im Falle eines außenverzahnten Werkstücks ein Verfahren der Werkzeugaufnahme mit dem Anfasfräser um das Werkstück herum und im Falle eines innenverzahnten Werkstücks ein Verfahren in radialer und in axialer Richtung durch die Mittenöffnung der Verzahnung hindurch umfasst, in einer bezüglich der Drehachse (C3) des Werkstücks zweiten radialen Richtung mit einem radial gegenüberliegenden Kantenbereich (27) der Verzahnung auf der zweiten Seite des Werkstücks in Eingriff gebracht wird.

15. Verwendung eines Anfasfräsers, insbesondere eines Chamfer-Cut-Fräsers, zur Durchführung eines Verfahrens nach einem der Ansprüche 13 und/oder 14 und/oder in einer Vorrichtung nach einem der Ansprüche 1 bis 12.

## Claims

1. Apparatus for chamfering at least one front-side edge of the gearing of a workpiece (21) having internal gearing, comprising at least one rotatably supported workpiece holder (20) for holding the workpiece, and comprising at least one rotatably supported tool holder (10) for holding at least one disk-shaped chamfer hob, which comprises cutting teeth and clamping grooves at the periphery, wherein the tool holder is arranged at an internal hob arm (30) of the apparatus,
**characterized in that**
the apparatus comprises a control for the automatic control of the machine axes, which is programmed such that the free end of the internal hob arm (30) can be traveled by a machine axis of the apparatus at least partly into the center opening formed by the internal gearing of the workpiece (21), in order to chamfer the edge of a gearing by means of the disk-shaped chamfer hob (11) on at least one and preferably on both front sides of the workpiece (21).

2. Apparatus in accordance with claim 1, wherein the free end of the internal hob arm (30) is traveled into the center opening such that the chamfer hob (11) dips at least partly into the center opening to machine an edge of the gearing, with the tool holder preferably being able to be traveled through the center opening of the workpiece to bring the chamfer hob into engagement with an edge (27) of the gearing on the lower side of the workpiece.

3. Apparatus in accordance with one of the preceding claims, wherein the workpiece holder (20) has a cup-shaped recess and permits a traveling of the chamfer hob below the edge (27) of the gearing on the lower side of the workpiece facing the cup-shaped recess, wherein the cup-shaped recess of the workpiece holder preferably has cut-outs for transporting away chips and/or coolant and/or has clamping jaws at its upper margin for clamping the workpiece and/or has a support edge for the lower side of the workpiece.

4. Apparatus in accordance with one of the preceding claims, wherein the machine axis via which the free end of the internal hob arm (30) can be traveled into the center opening does not extend into the center opening of the workpiece and is preferably arranged above or next to the workpiece holder, wherein the machine axis preferably enables a traveling of the internal hob arm in the axial direction of the workpiece holder.

5. Apparatus in accordance with one of the preceding claims, wherein a drivetrain extends in the internal hob arm (30) and connects a drive arranged at the body side through the internal hob arm to the tool holder (10) arranged at the internal hob arm, wherein the drivetrain preferably has a plurality of gears that mesh with one another and are arranged along the internal hob arm and/or has a belt drive and/or chain drive extending within the internal hob arm.

6. Apparatus in accordance with one of the preceding claims, wherein the tool arbor of the tool holder (10) only carries one chamfer hob (11),
and/or wherein the width of the internal hob arm, including the tool arbor, along the axis of the tool holder amounts to less than 10 times, preferably less than 5 times, the width of the chamfer hob; and/or
wherein the width of the tool arbor preferably amounts to less than 5 times, preferably less than 3 times, the width of the chamfer hob.

7. Apparatus in accordance with one of the preceding claims, comprising a sensor (60) preferably arranged at the internal hob arm (30) for threading and/or meshing the chamfer hob into the internal gearing of the workpiece, wherein the sensor preferably is arranged at the free end of the internal hob arm below the tool holder and/or works contactlessly,
and/or
comprising two tool holders for holding chamfer hobs, in particular chamfer cut hobs, that are arranged above one another along the internal hob arm, and/or comprising two tool holders for holding chamfer hobs, in particular chamfer cut hobs, that are arranged at separate internal hob arms that are preferably arranged in the axial direction of the tool holders spaced apart from one another at a machining head and/or extend in parallel with one another.

8. Apparatus in accordance with one of the preceding claims, wherein the tool holder (10) is rotatable by 180° via a pivot axis (A3) perpendicular to its axis of rotation (B3), wherein the pivot axis preferably is arranged at the internal hob arm, and further preferably enables a pivoting of a lower part of the internal hob arm together with the workpiece holder with respect to an upper part of the internal hob arm or to a connection with the mount.

9. Apparatus, in particular in accordance with one of the preceding claims, for chamfering at least one front-side edge of a gearing of a toothed workpiece (21) having at least one rotatably supported workpiece holder (20) for holding the workpiece and having at least one rotatably supported tool holder (10) for holding at least one disk-shaped chamfer hob (11) which comprises cutting teeth and clamping grooves at the periphery, wherein the tool holder (10) is travelable via at least one machine axis relative to the workpiece holder,
**characterized by**
a control for the automatic control of the machine axes for chamfering the edge of a gearing on both front sides of the workpiece, which is programmed such that the apparatus permits a chamfering of the edges of the gearing on both front sides of the workpiece (21) by the same chamfer hob (11) in that a disk-shaped chamfer hob held in the tool holder (10) is brought into engagement with an edge region of the gearing on a first side of the workpiece (21) in a first radial direction with respect to the axis of rotation (C3) of the workpiece holder and, by traveling the tool holder relative to the workpiece holder, which comprises a travelling of the tool holder with the chamfer hob around the workpiece in the case of a workpiece having external gearing and comprises a traveling in the radial and axial direction through the central opening of the gearing in the case of a workpiece having internal gearing, is brought into engagement with a radially oppositely disposed edge region of the gearing on the second side of the workpiece (21) in a second radial direction with respect to the axis of rotation (C3) of the workpiece holder.

10. Apparatus in accordance with claim 9, wherein the tool holder is arranged at a chamfer arm (30), wherein a chamfer hob (11) held in the tool holder is accessible from two sides disposed opposite with respect to the axis of rotation of the tool holder such that its first side can be brought into engagement with the edge region on the upper side of the workpiece and its second side can be brought into engagement with the edge region (27) on the lower side of the workpiece, wherein the radius of the chamfering tool preferably extends on the two sides beyond the tool holder and the chamfer arm.

11. Apparatus in accordance with one of the preceding claims, comprising at least one chamfer hob held in the tool holder, in particular comprising at least one chamfer cut hob held in the tool holder.

12. Gear manufacturing machining center having an apparatus (1) in accordance with one of the preceding claims, a gear cutting machine, and a workpiece changer (3), wherein the gear cutting machine preferably is a gear hobbing machine or a chamfer cut deburring device and/or a skiving machine, and/or wherein the gear manufacturing machining and the chamfering of the workpieces take place with parallel cycle times, and/or wherein the workpiece changer is a ring automation and the apparatus in accordance with one of the preceding claims and the gear cutting machine are arranged at different angular positions of the ring automation.

13. Method of chamfering at least one front-side edge of a gearing of a workpiece (21) having internal gearing, in particular by an apparatus in accordance with one of the preceding claims, by a disk-shaped chamfer hob held in a rotatably supported tool holder (10) and having cutting teeth and clamping grooves at the periphery,
**characterized in that**
the tool holder (10) is arranged at an internal hob arm (30) whose free end is traveled for chamfer machining at least partly into the center opening formed by the internal gearing of the workpiece (21), wherein the tool holder preferably is traveled through the center opening of the workpiece by traveling the internal hob arm to bring the chamfer hob into engagement with an edge (27) of the gearing on the lower side of the workpiece.

14. Method of chamfering at least one front-side edge of a gearing of a toothed workpiece (21), in particular by an apparatus in accordance with one of the preceding claims, by a chamfer hob (11) held in a rotatably supported tool holder and having cutting teeth and clamping grooves at the periphery,
**characterized in that**
a chamfering of the edges of the gearing takes place on both front sides of the workpiece (21) by the same chamfer hob (11) **in that** a chamfer hob (11) held in the tool holder (10) is brought into engagement with an edge region of the gearing on a first side of the workpiece in a first radial direction with respect to the axis of rotation (C3) of the workpiece and, by traveling the tool holder relative to the workpiece, which comprises a travelling of the tool holder with the chamfer hob around the workpiece in the case of a workpiece having external gearing and comprises a traveling in the radial and axial direction through the central opening of the gearing in the case of a workpiece having internal gearing, is brought into engagement with a radially oppositely disposed edge region (27) of the gearing on the second side of the workpiece in a second radial direction with respect to the axis of rotation (C3) of the workpiece.

15. Use of a chamfer hob, in particular of a chamfer cut hob, for carrying out a method in accordance with one of the claims 13 and/or 14 and/or in an apparatus in accordance with one of the claims 1 to 12.

## Revendications

1. Dispositif de chanfreinage d'au moins une arête de face de la denture d'une pièce (21) à denture intérieure, comprenant au moins une fixation de pièce (20) montée rotative pour recevoir la pièce et au moins un logement d'outil (10) monté rotatif pour recevoir au moins une fraise à chanfreiner (11) en forme de disque (11), qui comporte sur sa périphérie des dents coupantes et des rainures à copeaux, dans lequel le logement d'outil est disposé sur un bras de fraisage intérieur (30) du dispositif,
**caractérisé en ce que**
le dispositif comporte un dispositif de commande pour la commande automatique des axes de machine, qui est programmé de telle manière que l'extrémité libre du bras de fraisage intérieur (30) est déplacé, par un axe de machine du dispositif, au moins en partie dans l'ouverture centrale formée par la denture intérieure de la pièce (21), pour chanfreiner l'arête d'une denture sur au moins une et de préférence sur les deux faces frontales de la pièce (21) au moyen de la fraise à chanfreiner (11) en forme de disque.

2. Dispositif selon la revendication 1, dans lequel l'extrémité libre du bras de fraisage intérieur (30) peut être déplacée dans l'ouverture centrale de telle manière que la fraise à chanfreiner (11) plonge au moins en partie dans l'ouverture centrale pour usiner une arête de la denture, le logement d'outil pouvant de préférence être déplacé à travers l'ouverture centrale de la pièce pour amener la fraise à chanfreiner en prise avec une arête (27) de la denture sur la face inférieure de la pièce.

3. Dispositif selon l'une des revendications précédentes, dans lequel la fixation de pièce (20) comporte un creux en forme de pot et permet un déplacement de la fraise à chanfreiner sous l'arête (27) de la denture sur la face inférieure de la pièce orientée vers le creux en forme de pot, le creux en forme de pot de la fixation de pièce comportant de préférence des évidements pour l'évacuation de copeaux et/ou de fluide de refroidissement et/ou comportant sur son bord supérieur des mâchoires de serrage pour serrer la pièce et/ou un bord d'appui pour la face inférieure de la pièce.

4. Dispositif selon l'une des revendications précédentes, dans lequel l'axe de machine, par le biais duquel l'extrémité libre du bras de fraisage intérieur (30) peut être déplacée dans l'ouverture centrale, ne s'étend pas dans l'ouverture centrale de la pièce et est disposé de préférence au-dessus ou à côté de la fixation de pièce, l'axe de machine permettant de préférence un déplacement du bras de fraisage intérieur dans la direction de l'axe de la fixation de pièce.

5. Dispositif selon l'une des revendications précédentes, dans lequel des organes de transmission s'étendent dans le bras de fraisage intérieur (30), qui relient un entraînement disposé côté tronc, à travers le bras de fraisage intérieur, au logement d'outil (10) disposé sur le bras de fraisage intérieur, les organes de transmission comportant de préférence une pluralité de roues dentées disposées le long du bras de fraisage intérieur et s'engrenant les unes dans les autres et/ou un entraînement par courroie et/ou par chaîne s'étendant à l'intérieur du bras de fraisage intérieur.

6. Dispositif selon l'une des revendications précédentes, dans lequel le mandrin d'outil du logement d'outil (10) porte seulement une fraise à chanfreiner (11), et/ou dans lequel la largeur du bras de fraisage intérieur, mandrin d'outil compris, le long de l'axe du logement d'outil est inférieure à 10 fois la largeur de la fraise à chanfreiner, de préférence inférieure à 5 fois, et/ou dans lequel la largeur du mandrin d'outil est de préférence inférieure à 5 fois la largeur de la fraise à chanfreiner, de préférence inférieure au triple de celle-ci.

7. Dispositif selon l'une des revendications précédentes, comprenant un capteur (60) disposé de préférence sur le bras de fraisage intérieur (30), pour l'insertion et/ou le centrage de la fraise à chanfreiner dans la denture intérieure de la pièce, le capteur étant de préférence disposé sur l'extrémité libre du bras de fraisage intérieur sous le logement d'outil et/ou fonctionnant sans contact,
et/ou comprenant deux logements d'outil destinés à recevoir des fraises à chanfreiner, en particulier des fraises ChamferCut, qui sont disposées l'une au-dessus de l'autre le long du bras de fraisage intérieur,
et/ou comprenant deux logements d'outil destinés à recevoir des fraises à chanfreiner, en particulier des fraises ChamferCut, qui sont disposées sur des bras de fraisage intérieur séparés, qui sont de préférence disposés sur une tête d'usinage espacés l'un de l'autre dans la direction de l'axe des logements d'outil, et/ou qui s'étendent parallèlement l'un à l'autre.

8. Dispositif selon l'une des revendications précédentes, dans lequel le logement d'outil (10) est rotatif à 180° par le biais d'un axe de pivotement (A3) perpendiculaire à son axe de rotation (B3), l'axe de pivotement étant de préférence disposé sur le bras de fraisage intérieur et permettant de préférence encore un pivotement d'une partie inférieure du bras de fraisage intérieur avec le logement d'outil par rapport à une partie supérieure du bras de fraisage intérieur ou à une liaison avec la fixation.

9. Dispositif, en particulier selon l'une des revendications précédentes, de chanfreinage d'au moins une arête de face d'une denture d'une pièce (21) à denture, comprenant au moins une fixation de pièce (20) montée rotative pour recevoir la pièce et au moins un logement d'outil (10) monté rotatif pour recevoir au moins une fraise à chanfreiner (11) en forme de disque, qui comporte sur sa périphérie des dents coupantes et des rainures à copeaux, le logement d'outil (10) pouvant être déplacé par rapport à la fixation de pièce sur au moins un axe de machine,
**caractérisé par**
un dispositif de commande pour la commande automatique des axes de machine pour le chanfreinage de l'arête d'une denture sur les deux faces frontales de la pièce, qui est programmé de telle manière qu'un chanfreinage des arêtes de la denture est possible sur les deux faces frontales de la pièce (21) avec la même fraise à chanfreiner (11), en amenant en prise une fraise à chanfreiner en forme de disque reçue dans le logement d'outil (10) avec une zone d'arête de la denture sur une première face de la pièce (21) dans une première direction radiale par rapport à l'axe de rotation (C3) de la fixation de pièce et, par le déplacement du logement d'outil par rapport à la fixation de pièce, qui comprend, dans le cas d'une pièce à denture extérieure, un déplacement du logement d'outil avec la fraise à chanfreiner autour de la pièce et, dans le cas d'une pièce à denture intérieure, un déplacement dans la direction radiale et axiale à travers l'ouverture centrale de la denture, en prise avec une zone d'arête de la denture radialement opposée sur la seconde face de la pièce (21), dans une seconde direction radiale par rapport à l'axe de rotation (C3) de la fixation de pièce.

10. Dispositif selon la revendication 9, dans lequel le logement d'outil est disposé sur un bras de fraisage (30), une fraise à chanfreiner (11) reçue dans le logement d'outil étant accessible par deux côtés opposés par rapport à l'axe de rotation du logement d'outil, de telle sorte qu'elle peut être amenée en prise par le premier côté avec la zone d'arête sur la face supérieure de la pièce et par le second côté avec la zone d'arête (27) sur la face inférieure de la pièce, l'outil de chanfreinage dépassant avec son rayon, de préférence sur les deux côtés, du logement d'outil et du bras de fraisage.

11. Dispositif selon l'une des revendications précédentes, comprenant au moins une fraise à chanfreiner reçue dans le logement d'outil, en particulier au moins une fraise ChamferCut reçue dans le logement d'outil.

12. Centre d'usinage pour le taillage d'engrenages, comprenant un dispositif (1) selon l'une des revendications précédentes, une machine à tailler les engrenages et un changeur de pièce (3), la machine à tailler les engrenages étant de préférence une fraiseuse pour le taillage d'engrenages ou une mortaiseuse pour le taillage d'engrenages et/ou une machine à tailler les engrenages par développante, et/ou l'usinage de denture et le chanfreinage des pièces étant effectués parallèlement dans le temps de cycle et/ou le changeur de pièce (3) étant un système d'automatisation circulaire et le dispositif selon l'une des revendications précédentes et la machine à tailler les engrenages étant disposés dans différentes positions angulaires du système d'automatisation circulaire.

13. Procédé de chanfreinage d'au moins une arête de face d'une denture d'une pièce (21) à denture intérieure, en particulier par un dispositif selon l'une des revendications précédentes, par une fraise à chanfreiner (11) en forme de disque reçue dans un logement d'outil (10) monté rotatif, qui comporte sur sa périphérie des dents coupantes et des rainures à copeaux,
**caractérisé en ce que**
le logement d'outil (10) est disposé sur un bras de fraisage intérieur (30), dont l'extrémité libre est déplacée au moins en partie dans l'ouverture centrale formée par la denture intérieure de la pièce (21) pour l'usinage du chanfrein, le logement d'outil étant de préférence déplacé par le déplacement du bras de fraisage intérieur à travers l'ouverture centrale de la pièce, pour amener la fraise à chanfreiner en prise avec une arête (27) de la denture sur la face inférieure de la pièce.

14. Procédé de chanfreinage d'au moins une arête de face d'une denture d'une pièce (21) à denture, en particulier par un dispositif selon l'une des revendications précédentes, par une fraise à chanfreiner (11) en forme de disque reçue dans un logement d'outil (10) monté rotatif, qui comporte sur sa périphérie des dents coupantes et des rainures à copeaux,
**caractérisé en ce que**
un chanfreinage des arêtes de la denture est effectué sur les deux faces frontales de la pièce (21) avec la même fraise à chanfreiner (11), en amenant en prise une fraise à chanfreiner (11) reçue dans le logement d'outil (10) avec une zone d'arête de la denture sur une première face de la pièce dans une première direction radiale par rapport à l'axe de rotation (C3) de la pièce et, par le déplacement du logement d'outil par rapport à la pièce, qui comprend, dans le cas d'une pièce à denture extérieure, un déplacement du logement d'outil avec la fraise à chanfreiner autour de la pièce et, dans le cas d'une pièce à denture intérieure, un déplacement dans la direction radiale et axiale à travers l'ouverture centrale de la denture, en prise avec une zone d'arête (27) de la denture radialement opposée sur la seconde face de la pièce, dans une seconde direction radiale par rapport à l'axe de rotation (C3) de la pièce.

15. Utilisation d'une fraise à chanfreiner, en particulier d'une fraise ChamferCut, pour exécuter un procédé selon l'une des revendications 13 et/ou 14 et/ou dans un dispositif selon l'une des revendications 1 à 12.
